# EUROPÄISCHE PATENTANMELDUNG

(11) **EP 3 148 028 A1**
(43) Veröffentlichungstag der Anmeldung: **29.03.2017**
(21) Anmeldenummer: 16187767.5
(22) Anmeldetag: 08.09.2016
(51) Int. Cl.: H02H 3/033, H02H 3/16, H02H 3/30, H02H 7/26, H02H 1/00, H02H 1/06, H02H 7/06

(54) **SCHUTZVORRICHTUNG FÜR EINE ELEKTRISCHE ENERGIEVERSORGUNGSEINRICHTUNG UND ELEKTRISCHE ENERGIEVERSORGUNGSEINREICHTUNG MIT EINER DERARTIGEN SCHUTZVORRICHTUNG**

(30) Priorität: 10.09.2015 DE 102015115284
(71) Anmelder: Helmut-Schmidt-Universität Hamburg Universität der Bundeswehr, 22045 Hamburg (DE); Helmut-Schmidt-Universität, 22043 Hamburg (DE)
(72) Erfinder: GRUMM, Florian, 12587 Berlin (DE); STORJOHANN, Jens, 22765 Hamburg (DE); LÜCKEN, Arno, 20255 Hamburg (DE); SCHULZ, Detlef, 22043 Hamburg (DE)
(74) Vertreter: RGTH

(57) **Zusammenfassung**

Eine Schutzvorrichtung (100,300,400) für eine wenigstens eine Energiequelle (102), insbesondere mit geringer Überstromfähigkeit, eine Energieübertragungseinrichtung (103,303,403) mit wenigstens einem Netzstrang (104,105,106,304,404) und an jedem Netzstrang wenigstens eine angeschlossene Last (107) umfassende elektrische Energieversorgungseinrichtung (101,301,401), die selektiv eingegrenzte Bestandteile der Energieübertragungseinrichtung und die Energiequelle schützt, enthält je Netzstrang eine Lastschutzstufe (108,109,110,308), über die die wenigstens eine Last angeschlossen ist, eine Quellenschutzstufe (111) zum Abschalten der Energiequelle bei Unteroder Überspannung an der Energiequelle, in jeder Lastschutzstufe eine Messeinrichtung (150,151,350,351) zum Detektieren eines Strangstroms (IL,IL1,IL2,IL3) und einer Lastspannung (UL,UL1,UL2,UL3) sowie eine Schaltvorrichtung (153,353) zum Trennen des Netzstrangs von der Energiequelle, wenn der Strangstrom einen vorgebbaren Grenzwert überschreitet, und eine zentrale Steuerstufe (112,312) zum für jeden Netzstrang Vergleichen der Lastspannung mit einer Quellenspannung (UQ) und zum selektiven Trennen derjenigen Netzstränge, in denen zwischen der Lastspannung und der Quellenspannung eine Abweichung vorbestimmter Größe auftritt.

## Beschreibung

Schutzvorrichtung für eine elektrische Energieversorgungseinrichtung und elektrische Energieversorgungseinrichtung mit einer derartigen Schutzvorrichtung

Die Erfindung betrifft eine Schutzvorrichtung für eine elektrische Energieversorgungseinrichtung. Die Erfindung betrifft weiterhin eine elektrische Energieversorgungseinrichtung mit einer derartigen Schutzvorrichtung.

### Stand der Technik

Aus der Druckschrift EP 2 551 983 A1 sind ein System und ein Verfahren zum Schützen eines elektrischen Energieversorgungsnetzes gegen elektrische Fehler bekannt. Dabei ist wenigstens ein erster Überlastschalter, dem eine erste Befehls- und Steuereinheit zugeordnet ist, auf einer ersten Hierarchieebene angeordnet. Ein oder mehrere weitere Überlastschalter, die jeder eine entsprechende zweite elektronische Einheit umfassen, sind auf einer oder mehreren zusätzlichen Hierarchieebenen, die hierarchisch der ersten Hierarchieebene nachgeordnet sind, und in Kaskade zueinander angeordnet. Der erste Überlastschalter umfasst wenigstens eine elektronische Halbleiter-Abschalteinrichtung. Die erste Befehls- und Steuereinheit ist derart konfiguriert, dass durch sie, auf ein Auftreten eines elektrischen Fehlers in einem Netzbereich des elektrischen Energieversorgungsnetzes hin, die elektronische Halbleiter-Abschalteinrichtung dahingehend angesteuert wird, einen durch diese elektronische Halbleiter-Abschalteinrichtung fließenden Strom wenigstens für eine vorbestimmte Zeitdauer zu begrenzen. Von der ersten Befehls- und Steuereinheit wird an die Überlastschalter auf den niedrigeren Hierarchieebenen ein Eingreifbefehl gesendet, der dazu dient, ein Eingreifen desjenigen Überlastschalters zu veranlassen, der von allen Überlastschaltern, die den elektrischen Fehler erkannt haben, am nächsten unmittelbar oberhalb desjenigen Netzbereichs angeordnet ist, in dem der elektrische Fehler aufgetreten ist. Mit diesem System und Verfahren soll eine verbesserte Lösung im Hinblick auf ein selektives Eingreifen als Reaktion auf die Erkennung eines elektrischen Fehlers im elektrischen Energieversorgungsnetz geschaffen werden. Unter selektivem Eingreifen oder Selektivität wird dabei die Fähigkeit verstanden, von einer elektrischen Energieversorgungsquelle nur verhältnismäßig eingegrenzte Netzbereiche nahe am Ort des elektrischen Fehlers zu trennen. Durch eine solche Fähigkeit eines koordinierten und begrenzten Handelns soll die durch den elektrischen Fehler verursachte Unwirksamkeit nur auf die wirklich gefährdeten Netzbereiche begrenzt und so zugleich der Betriebszustand des restlichen elektrischen Energieversorgungsnetzes erhalten werden.

### Darstellung der Erfindung: Aufgabe, Lösung, Vorteile

Die Erfindung hat die Aufgabe, eine Schutzvorrichtung für eine elektrische Energieversorgungseinrichtung zu schaffen, mit der außer einem Schutz eines elektrischen Energieversorgungsnetzes und insbesondere selektiv nur verhältnismäßig eingegrenzter Netzbereiche zusätzlich ein wirksamer Schutz einer das elektrische Energieversorgungsnetz speisenden elektrischen Energieversorgungsquelle - kurz: Energiequelle - auch für Energiequellen mit geringer Überstromfähigkeit erzielt wird.

### Diese Aufgabe wird gelöst durch eine Schutzvorrichtung für eine

- wenigstens eine Energiequelle, insbesondere wenigstens eine Energiequelle mit geringer Überstromfähigkeit,
- eine Energieübertragungseinrichtung mit wenigstens einem Netzstrang und
- an jedem Netzstrang wenigstens eine daran angeschlossene Last, der Energie von der wenigstens einen Energiequelle über den Netzstrang zuführbar ist,
   umfassende elektrische Energieversorgungseinrichtung,
   enthaltend:
- je Netzstrang eine Lastschutzstufe, über die die wenigstens eine Last am Netzstrang angeschlossen ist,
- wenigstens eine Quellenschutzstufe zum Abschalten der wenigstens einen Energiequelle bei Vorliegen einer Unter- oder Überspannung an der Energiequelle;
- in jeder Lastschutzstufe eine Messeinrichtung zum Detektieren eines Strangstroms und einer Lastspannung sowie eine Schaltvorrichtung zum Trennen des Netzstrangs von der Energiequelle, wenn der Strangstrom einen vorgebbaren Grenzwert überschreitet;
- wenigstens eine zentrale Steuerstufe wenigstens zum für jeden Netzstrang Vergleichen der Lastspannung mit wenigstens einer von der wenigstens einen Energiequelle abgebbaren Quellenspannung und zum selektiven Trennen derjenigen Netzstränge von der wenigstens einen Energiequelle, in denen zwischen der Lastspannung und der Quellenspannung eine Abweichung vorbestimmter Größe auftritt.

Der Energiequelle kommt dabei die Aufgabe zu, elektrische Energie über die Energieübertragungseinrichtung an die wenigstens eine Last zu liefern. Dabei kann die elektrische Energieversorgungseinrichtung mit einer oder mehreren Energiequellen ausgebildet sein, aus denen die wenigstens eine Last gespeist wird, d.h. die gemeinsam - voneinander abhängig oder unabhängig - Energie in die Energieübertragungseinrichtung speisen.

Besonders vorteilhaft ist die erfindungsgemäße Schutzvorrichtung mit einer Energiequelle einsetzbar, die eine geringe Überstromfähigkeit aufweist. Dabei kann diese eine geringe Überstromfähigkeit aufweisende Energiequelle sowohl zum Abgeben einer Wechselspannung als auch einer Gleichspannung als Quellenspannung eingerichtet sein. Als Überstromfähigkeit wird die Fähigkeit der Energiequelle bezeichnet, einen über einen Nennstrom, zu dessen Lieferung die Energiequelle dimensioniert und mit dem sie bestimmungsgemäß betreibbar ist, hinausgehenden Strom, d.h. Überstrom, zu liefern. Als gering in diesem Zusammenhang wird die Überstromfähigkeit bezeichnet, wenn sie nicht ausreicht, um eine konventionelle Überstrom-Zeitschutzschalteinrichtung auszulösen, wenn diese auf den Nennstrom der Energiequelle ausgelegt ist.

Eine derartige, konventionelle Überstrom-Zeitschutzschalteinrichtung ist besonders bevorzugt gebildet durch eine herkömmliche Leitungssicherung, insbesondere durch einen herkömmlichen Sicherungsautomaten. Bei diesen erfolgt eine Auslösung regelmäßig dadurch, dass ein bestimmter Überstrom, der einem vorgebbaren Vielfachen eines in einem Netzstrang der Energieübertragungseinrichtung, d.h. z.B. in einer zu sichernden Leitung eines Energieversorgungsnetzes, zulässigen Nennstroms entspricht, über die Dauer eines vorgebbaren Zeitintervalls hinweg fließt. Bei Haushalts-Sicherungsautomaten weist dieser Überstrom z.B. eine Größenordnung vom Zwei- bis Dreifachen des Nennstroms und das Zeitintervall eine Dauer von einigen Sekundenbruchteilen auf.

Die Energieübertragungseinrichtung ist dazu eingerichtet, die elektrische Energie von der Energiequelle bzw. den Energiequellen über den wenigstens einen Netzstrang an die wenigstens eine Last zu übertragen. Bevorzugt ist die Energieübertragungseinrichtung als Energieversorgungsnetz - kurz: Netz - zur Versorgung der wenigstens einen Last gestaltet. Ein Netzstrang ist dabei ein Zweig des Netzes, an dem - über eine Lastschutzstufe - wenigstens eine Last angeschlossen ist. Daneben kann das Netz weitere Bestandteile, z.B. weitere Zweige oder Abschnitte, umfassen.

Der wenigstens einen Last ist die elektrische Energie von der wenigstens einen Energiequelle über das Netz zuführbar. Die wenigstens eine Energiequelle, das Netz und die wenigstens eine Last sind also dazu eingerichtet, dass elektrische Energie von der wenigstens einen Energiequelle über das Netz der wenigstens einen Last zugeführt wird.

Bei der erfindungsgemäßen Schutzvorrichtung sind in jeder Lastschutzstufe eine Messeinrichtung zum Detektieren eines Strangstroms und einer Lastspannung sowie eine Schaltvorrichtung zum Trennen des Netzstrangs von der Energiequelle, wenn der Strangstrom einen vorgebbaren Grenzwert überschreitet, vorgesehen. Dabei ist als Lastspannung diejenige elektrische Spannung bezeichnet, die im Betrieb der elektrischen Energieversorgungseinrichtung, d.h. der erfindungsgemäßen Schutzvorrichtung, an der Last, d.h. deren Anschlüssen, gemessen wird. Als Strangstrom ist ferner der Strom in einem Netzstrang bezeichnet. Dieser Strangstrom entspricht der Summe aller Ströme in allen Lasten, die an diesen einen Netzstrang angeschlossen sind.

Somit ist jede der Lastschutzstufen ausgebildet mit wenigstens einer Messeinrichtung zum Detektieren eines Strangstroms und einer Lastspannung sowie mit einer Schaltvorrichtung zum Trennen des Netzstrangs von der Energiequelle, wenn der Strangstrom einen vorgebbaren Grenzwert überschreitet. Je eine solche Messeinrichtung und je eine solche Schaltvorrichtung sind somit als Mindestausstattung von jeder der Lastschutzstufen umfasst, so dass jede Lastschutzstufe wenigstens einen Überstromschutz für den zugehörigen Strang und eine Lastspannungsmessung aufweist. Die Ausgestaltung der erfindungsgemäßen Schutzvorrichtung mit wenigstens einer Quellenschutzstufe zum Abschalten der wenigstens einen Energiequelle bei Vorliegen einer Unter- oder Überspannung an der Energiequelle ermöglicht einen selektiven Schutz jeder der wenigstens einen Energiequelle unabhängig vom Schutz der Energieübertragungseinrichtung bzw. des wenigstens einen Netzstrangs und der wenigstens einen Last durch die wenigstens eine Lastschutzstufe. Dazu wird detektiert, ob eine Spannung an der Energiequelle, d.h. eine von der Energiequelle abgegebene Spannung - kurz: Quellenspannung - einen vorgegebenen oberen Schwellenwert überschreitet oder einen vorgegebenen unteren Schwellenwert unterschreitet. Das Abschalten sowohl bei Auftreten einer Unterspannung als auch bei einer Überspannung ermöglicht einen einfachen und universellen Schutz der Energiequelle gegen unterschiedliche Fehler sowie einen wirksamen Schutz auch von Energiequellen unterschiedlicher Ausbildungen. Insbesondere wird dadurch ein wirksamer Schutz auch von Energiequellen mit geringer Überstromfähigkeit erzielt, z.B. von mit Brennstoffzellen, Photovoltaikelementen oder dergleichen ausgebildeten Energiequellen.

Die erfindungsgemäße Schutzvorrichtung enthält schließlich wenigstens eine zentrale Steuerstufe wenigstens zum für jeden Netzstrang Vergleichen der Lastspannung mit wenigstens einer von der wenigstens einen Energiequelle abgebbaren Quellenspannung und zum selektiven Trennen derjenigen Netzstränge von der wenigstens einen Energiequelle, in denen zwischen der Lastspannung und der Quellenspannung eine Abweichung vorbestimmter Größe auftritt. Sofern keine oder nur eine Abweichung auftritt, die geringer ist als die vorgenannte Abweichung vorbestimmter Größe, werden die Netzstränge von der wenigstens einen zentralen Steuerstufe mit der Energiequelle verbunden, d.h., die wenigstens eine zentrale Steuerstufe ist ausgebildet zum Verbinden der Netzstränge mit der Energiequelle in diesem Fall. Im Einzelnen bedeutet dies, dass die wenigstens eine zentrale Steuerstufe wenigstens
- zum für jeden Netzstrang durchzuführenden Vergleichen der Lastspannung, die in diesem Netzstrang auftritt, mit der Quellenspannung,
- zum selektiven Trennen derjenigen Netzstränge von der wenigstens einen Energiequelle, in den eine Abweichung vorbestimmter Größe auftritt, und
- ansonsten zum Verbinden der Netzstränge mit der wenigstens einen Energiequelle
dient, d.h. die wenigstens eine zentrale Steuerstufe steuert dieses Trennen bzw. Verbinden, wobei diese Funktionen des Vergleichens, Trennens bzw. Verbindens eine Mindestausstattung der gemäß der Erfindung ausgebildeten zentralen Steuerstufe darstellen.

Vorteilhafte Ausgestaltungen der Erfindung sind in den Unteransprüchen gekennzeichnet.

Gemäß einer bevorzugten Weiterbildung der erfindungsgemäßen Schutzvorrichtung ist zu jeder Energiequelle wenigstens eine, bevorzugt genau eine, Quellenschutzstufe vorgesehen. Diese Quellenschutzstufe dient zum Abschalten der Energiequelle bei Vorliegen einer Unter- oder Überspannung an der Energiequelle und damit dem individuellen Schutz genau dieser Energiequelle durch ein gemeinsames Trennen aller aus dieser Energiequelle gespeisten Netzstränge von dieser Energiequelle bei Feststellung einer Unter- oder Überspannung an der Energiequelle. Wahlweise kann auch vorgesehen sein, dass nicht alle, sondern einer oder mehrere, d.h. nur eine Teilanzahl, der von dieser Energiequelle gespeisten Netzstränge bei Vorliegen einer Unter- oder Überspannung an der Energiequelle von dieser Energiequelle getrennt, d.h. abgeschaltet, werden. Auf diese Weise kann z.B. bei einer Überlastung der Energiequelle eine gezielte Abschaltung von Netzsträngen mit Lasten erfolgen, die für den Betrieb der Energieversorgungseinrichtung von geringerer Bedeutung sind, aber die Speisung von Netzsträngen mit für den Betrieb der Energieversorgungseinrichtung hoher Bedeutung aufrechterhalten werden. In einer weiteren Variation können Netzstränge stufenweise von der Energiequelle getrennt und kann dadurch die Energiequelle stufenweise entlastet werden, bevorzugt bis zu einem Betriebszustand, in dem die genannte Überlastung beseitigt ist.

Bei einer weiteren bevorzugten Ausführungsform der erfindungsgemäßen Schutzvorrichtung ist zu jeder Energiequelle wenigstens eine, bevorzugt genau eine, zentrale Steuerstufe vorgesehen. Durch eine derartige Zuordnung von Energiequelle bzw. Energiequellen einerseits und zentraler Steuerstufe bzw. zentralen Steuerstufen andererseits kann die vorbeschriebene Überwachung, d.h. das Vergleichen, der Lastspannung bzw. Lastspannungen und der Quellenspannung bzw. Quellenspannungen besonders einfach und betriebssicher ausgeführt werden.

Nach einer weiteren bevorzugten Ausführungsform der erfindungsgemäßen Schutzvorrichtung ist für jeden des wenigstens einen Netzstrangs je eine, insbesondere mit einem Relais ausgebildete, zweite Schaltvorrichtung vorgesehen, die durch die wenigstens eine Quellenschutzstufe, insbesondere durch die Quellenschutzstufe der Energiequelle, aus der der betreffende Netzstrang speisbar ist, steuerbar ist zum Verbinden des betreffenden Netzstrangs mit der Energiequelle bzw. zum Trennen des betreffenden Netzstrangs von der Energiequelle. Im Betrieb wird also die je eine zweite Schaltvorrichtung für jeden des wenigstens einen Netzstrangs durch die wenigstens eine Quellenschutzstufe, insbesondere durch die Quellenschutzstufe der Energiequelle, aus der der wenigstens eine Netzstrang gespeist wird, gesteuert zum Verbinden bzw. Trennen des betreffenden Netzstrangs mit bzw. von der Energiequelle. Vorteilhaft sind dabei die wenigstens eine Quellenschutzstufe und/oder die wenigstens eine zentrale Steuerstufe mit der zweiten Schaltvorrichtung bzw. den zweiten Schaltvorrichtungen in einer Baugruppe zusammengefasst, z.B. gemeinsam in einer Art von Schaltkasten bzw. Verteilerkasten aufgenommen.

In einer bevorzugten Weiterbildung der erfindungsgemäßen Schutzvorrichtung ist eine Signalübertragungseinrichtung vorgesehen zum Verbinden wenigstens der wenigstens einen zentralen Steuerstufe und wenigstens einer der einen oder mehreren Lastschutzstufen miteinander zum Übertragen wenigstens eines von der Messeinrichtung der Lastschutzstufe bzw. Lastschutzstufen detektierten Strangstroms und/oder einer von der Messeinrichtung der Lastschutzstufe bzw. Lastschutzstufen detektierten Lastspannung an die wenigstens eine zentrale Steuerstufe. Insbesondere ist eine mit einem Datenbus ausgebildete Signalübertragungseinrichtung vorgesehen, wobei ein solcher Datenbus vorteilhaft nach an sich bekannten Bauformen und Standards ausgebildet ist. Damit ist eine sehr einfache, leistungsfähige und schnelle Übertragung von Daten möglich, die Messwerte des wenigstens einen detektierten Strangstroms und/oder der wenigstens einen detektierten Lastspannung umfassen, und umgekehrt kann auch eine Übertragung von Daten und/oder Steuerbefehlen von der wenigstens einen zentralen Steuerstufe an die Lastschutzstufe bzw. Lastschutzstufen sehr einfach, leistungsfähig und schnell vorgenommen werden.

Eine bevorzugte Weiterbildung der erfindungsgemäßen Schutzvorrichtung ist dadurch gekennzeichnet, dass die wenigstens eine zentrale Steuerstufe und/oder die wenigstens eine Lastschutzstufe mit je wenigstens einer Signalverarbeitungseinrichtung, insbesondere digitalen Signalverarbeitungseinrichtung, bevorzugt mit einem Mikroprozessor ausgebildeten Signalverarbeitungseinrichtung, d.h. einer programmierbaren Steuereinrichtung, ausgestaltet sind. Insbesondere die Ausgestaltung der wenigstens einen Lastschutzstufe mit einer digitalen Signalverarbeitungseinrichtung ermöglicht außer einer Aufbereitung der vorgenannten Messwerte des wenigstens einen detektierten Strangstroms und/oder der wenigstens einen detektierten Lastspannung in digitale Daten auch eine Vielzahl weiterer Steuerfunktionen, die einfach und flexibel wählbar in der wenigstens einen Lastschutzstufe ausgebildet sein können.

In einer weiteren bevorzugten Ausführungsform der erfindungsgemäßen Schutzvorrichtung ist eine weitere Signalübertragungseinrichtung vorgesehen, über die wenigstens die wenigstens eine zentrale Steuerstufe mit weiteren, externen Signalverarbeitungseinrichtungen, insbesondere mit Einrichtungen zu einer Protokollierung von Betriebszuständen der Schutzvorrichtung und/oder mit Einrichtungen zu einer Fernsteuerung und/oder Fernwartung, verbunden ist, wobei bevorzugt die weitere Signalübertragungseinrichtung mit einem Datenbus ausgebildet ist. Besonders bevorzugt ist die weitere Signalübertragungseinrichtung mit dem Datenbus ausgestaltet, mit dem die Signalübertragungseinrichtung zum Verbinden wenigstens der wenigstens einen zentralen Steuerstufe und wenigstens einer der einen oder mehreren Lastschutzstufen ausgebildet ist, d.h. beide Signalübertragungseinrichtungen sind in einem einzigen Datenbus zusammengefasst, wodurch ein besonders einfacher und zuverlässiger Aufbau erzielt wird. Die weiteren, externen Signalverarbeitungseinrichtungen sind bevorzugt ebenfalls mit wenigstens einer digitalen Signalverarbeitungseinrichtung, insbesondere einem Rechner, z.B. einem Zentralrechner, ausgebildet. Die vorgenannten Einrichtungen zur Protokollierung und/oder Fernsteuerung und/oder Fernwartung lassen sich damit sehr einfach und leistungsfähig ausgestalten. Dadurch kann der Betrieb der Energieversorgungseinrichtung, insbesondere der darin eingesetzten Schutzvorrichtung, in sehr leistungsfähiger, vielseitiger und flexibler Weise durchgeführt werden. Bevorzugt lassen sich über die Protokollierung der Betriebszustände auch sehr einfach Anforderungen an eine Aufzeichnung eines Betriebsablaufs einer solchen Energieversorgungseinrichtung z.B. in einem Luftfahrzeug erfüllen. Eine weitere, vorteilhafte Nutzung der Protokollierung und/oder Fernwartung besteht darin, dass eine wenigstens teilautomatisierte Fehlererkennung durchführbar ist einschließlich einer - ebenfalls wenigstens teilautomatischen - Abgabe einer Bestellung von Ersatzteilen für die Energieversorgungseinrichtung.

Bei einer anderen Ausführungsform der erfindungsgemäßen Schutzvorrichtung ist die wenigstens eine Signalverarbeitungseinrichtung der wenigstens einen zentralen Steuerstufe wenigstens eingerichtet für
- ein Steuern eines Verbindens und/oder Trennens wenigstens einer der Lasten mit bzw. von der Energiequelle in Abhängigkeit wenigstens von einer verfügbaren Leistungsabgabe der Energiequelle,
- ein Erkennen hochohmiger Kurzschlüsse und/oder Isolationsfehler wenigstens in einem des wenigstens einen Netzstrangs wenigstens auf Grundlage wenigstens eines vorgegebenen Leitungswiderstands des wenigstens einen Netzstrangs, wenigstens eines gemessenen Strangstroms und wenigstens einer gemessenen Lastspannung,
- ein Erkennen gegenüber einem Sollzustand veränderter Impedanzen und/oder von Unterbrechungen in wenigstens einem des wenigstens einen Netzstrangs und/ oder in wenigstens einem sonstigen Zweig der Energieübertragungseinrichtung.

Das Verbinden und/oder Trennen der wenigstens einen der Lasten mit bzw. von der Energiequelle in Abhängigkeit wenigstens von der verfügbaren Leistungsabgabe der Energiequelle, also das Zu- und/oder Abschalten wenigstens einer der Lasten von der Energiequelle abhängig von deren Leistungsfähigkeit und Auslastung, ist vorteilhaft einsetzbar für ein sogenanntes "Energiemanagement", durch das die Effizienz elektrischer Anlagen wie insbesondere Energieversorgungseinrichtungen erhöht werden soll. Je nach Bedarf oder Notwendigkeit einer Leistungsverringerung in einzelnen Netzsträngen und/oder einem sonstigen Zweig der Energieübertragungseinrichtung können Lasten von der Energieübertragungseinrichtung getrennt oder auch wieder zugeschaltet werden. Für eine Bestimmung, welche Last, d.h. welcher Netzstrang, ab- bzw. zugeschaltet wird, können bevorzugt auch die Messwerte des wenigstens einen detektierten Strangstroms und/oder der wenigstens einen detektierten Lastspannung ausgewertet werden. Durch die wenigstens eine Signalverarbeitungseinrichtung der wenigstens einen zentralen Steuerstufe und/oder die wenigstens eine Signalverarbeitungseinrichtung der wenigstens einen Lastschutzstufe ist eine derartige Auswertung und Steuerung sehr einfach und flexibel ausführbar.

Die Messwerte des wenigstens einen detektierten Strangstroms und/oder der wenigstens einen detektierten Lastspannung sind ferner vorteilhaft auch dazu auswertbar, hochohmige Kurzschlüsse und/oder Isolationsfehler in dem wenigstens einen Netzstrang zu erkennen. Dafür werden ferner der vorgegebene Leitungswiderstand des wenigstens einen Netzstrangs sowie die Quellenspannung herangezogen. Bei fehlerfreiem Netzstrang muss der Messwert der Lastspannung mit einem nach dem ohmschen Gesetz aus Quellenspannung, Leitungswiderstand und Strangstrom ermittelten Sollwert dieser Lastspannung übereinstimmen. Hochohmige Kurzschlüsse und/oder Isolationsfehler machen sich über zusätzliche Ströme bemerkbar, die zusätzliche Spannungsabfälle im betroffenen Netzstrang verursachen. Messwert und Sollwert der Lastspannung stimmen nicht mehr überein. Liegt also eine Abweichung vor, wird dies als hochohmiger Kurzschluss und/oder Isolationsfehler erkannt.

Das Erkennen gegenüber einem Sollzustand veränderter Impedanzen und/oder von Unterbrechungen in wenigstens einem des wenigstens einen Netzstrangs und/ oder in wenigstens einem sonstigen Zweig der Energieübertragungseinrichtung erfolgt vorteilhaft in vergleichbarer Weise auf Grundlage des wenigstens einen vorgegebenen Leitungswiderstands des wenigstens einen Netzstrangs sowie gemessenem Strangstrom und gemessener Lastspannung.

Nach einer anderen Ausführungsform der erfindungsgemäßen Schutzvorrichtung ist die wenigstens eine Signalverarbeitungseinrichtung der wenigstens einen Lastschutzstufe des wenigstens einen Netzstrangs wenigstens eingerichtet für
- ein Auswerten des von der Messeinrichtung der wenigstens einen Lastschutzstufe detektierten Strangstroms und/oder der von der Messeinrichtung der wenigstens einen Lastschutzstufe detektierten Lastspannung, bevorzugt von deren Augenblickswerten und/oder deren zeitlichen Verläufen, sowie
- ein daraus Erkennen wenigstens eines Fehlerstroms in dem wenigstens einen Netzstrang.

Wie nachstehend noch näher erläutert, wird die hier beschriebene Energieversorgungseinrichtung vorteilhaft durch wenigstens eine als Gleich- und/oder Wechselspannung ausgebildete Quellenspannung gespeist, wobei Frequenzen dieser Quellenspannung bevorzugt gering gegenüber Arbeits- und/oder Taktfrequenzen sind, wie sie zum Betrieb üblicher Signalverarbeitungseinrichtungen, insbesondere digitaler Signalverarbeitungseinrichtungen, bevorzugt mit einem Mikroprozessor ausgebildeter Signalverarbeitungseinrichtungen, benutzt werden. Damit ist es möglich, mit der erfindungsgemäß ausgebildeten wenigstens einen zentralen Steuerstufe und/oder Lastschutzstufe sehr präzise Messungen zeitlicher Verläufe der wenigstens einen Lastspannung und des wenigstens einen Strangstroms vorzunehmen. Aus den dabei gewonnenen Messwerten lassen sich Abweichungen dieser zeitlichen Verläufe von vorgebbaren Sollverläufen ermitteln. Vorteilhaft werden derartige Abweichungen des wenigstens einen Strangstroms als Fehlerstrom erkannt, und dieser Fehlerstrom wird als Auslöser zum Trennen des Netzstrangs von der Energiequelle mit Hilfe der Schaltvorrichtung der Lastschutzstufe des betroffenen Netzstrangs herangezogen. Eine derartige Fehlerstromerkennung ist wesentlich genauer und reagiert auf Fehlerströme bedeutend empfindlicher als eine herkömmliche Effektivwertmessung eines Fehlerstroms, so dass eine gegenüber z.B. herkömmlichen FI-Schaltern wesentlich gesteigerte Präzision und Empfindlichkeit in der Erkennung von Fehlerströmen erzielt wird.

Aus den gewonnenen Messwerten der zeitlichen Verläufe der wenigstens einen Lastspannung und des wenigstens einen Strangstroms lassen sich weiterhin Amplituden, Phasenwinkel, Blind- und Wirkströme sowie Blind- und Wirkwiderstände bzw. Blind- und Wirkleistungen im wenigstens einen Netzstrang bestimmen. Somit lassen sich unmittelbar elektrische Eigenschaften der wenigstens einen über den wenigstens einen Netzstrang gespeisten Last ermitteln. Weichen diese Eigenschaften von vorgegebenen Sollwerten ab, wird diese Abweichung vorteilhaft als Auslöser zum Trennen des Netzstrangs von der Energiequelle mit Hilfe der Schaltvorrichtung der Lastschutzstufe des betroffenen Netzstrangs herangezogen.

Wahlweise oder zusätzlich zum Trennen des Netzstrangs von der Energiequelle können die Abweichungen, insbesondere Fehlerströme, über die Signalübertragungseinrichtung, bevorzugt den Datenbus, an die wenigstens eine zentrale Steuerstufe und/oder an weitere, externe Signalverarbeitungseinrichtungen gemeldet werden.

Gemäß einer bevorzugten Weiterbildung der erfindungsgemäßen Schutzvorrichtung ist jeder Quellenschutzstufe je eine Gleichspannungsumformeinrichtung, insbesondere ausgebildet mit einem Gleichspannungswandler, nachgeschaltet zum Umformen einer von der Quellenschutzstufe abgegebenen Spannung in eine Schutzkleinspannung zum Betreiben der wenigstens einen zweiten Schaltvorrichtung und/oder der wenigstens einen zentralen Steuerstufe. Diese Weiterbildung ist vorteilhaft einsetzbar, sofern eine Energiequelle mit einer Quellenspannung zum Einsatz kommt, die diese Schutzkleinspannung übersteigt, insbesondere wesentlich übersteigt; z.B. beträgt die Quellenspannung bis zu einigen hundert Volt, wohingegen als Schutzkleinspannung höchstens 42 Volt zugelassen sind. Bei einer bevorzugten Ausgestaltung der Quellenschutzstufe derart, dass die von der Quellenschutzstufe abgegebene Spannung bis auf schaltungsbedingte Spannungsverluste der Quellenspannung entspricht, übersteigt dann auch die von der Quellenschutzstufe abgegebene Spannung die genannte Schutzkleinspannung. Dies ist aber zum Betreiben der wenigstens einen zweiten Schaltvorrichtung und/oder der wenigstens einen zentralen Steuerstufe nachteilig und unerwünscht, da z.B. mit Halbleiterschaltungen üblicher Bauart aufgebaute, insbesondere digitale, Signalverarbeitungseinrichtungen mit sehr viel geringeren Versorgungs- und/oder Signalspannungen betrieben werden. Außerdem wird bei einem Betreiben der wenigstens einen zweiten Schaltvorrichtung und/oder der wenigstens einen zentralen Steuerstufe mit einer die Schutzkleinspannung übersteigenden Spannung eine Überprüfung und/oder Wartung und/oder Reparatur der erfindungsgemäßen Schutzvorrichtung erschwert, da an dieser dann nicht mehr unter Spannung gearbeitet werden kann bzw. darf. Das Betreiben mit einer Schutzkleinspannung vermeidet diese Nachteile.

Bei einer weiteren bevorzugten Ausführungsform der erfindungsgemäßen Schutzvorrichtung ist die wenigstens eine Energiequelle zum Liefern wenigstens einer Gleichspannung eingerichtet, durch die der wenigstens einen Last Energie von der wenigstens einen Energiequelle zuführbar ist. Dies stellt eine bevorzugte Ausgestaltung der mit der erfindungsgemäßen Schutzvorrichtung ausgebildeten Energieversorgungseinrichtung dar, wie sie z.B. in Fahrzeug- Inselnetzen zur Ausbildung gelangt, die z.B. aus wenigstens einer mit wenigstens einer Brennstoffzelle gebildeten Energiequelle gespeist werden, oder wie sie in aus Photovoltaikelementen gespeisten Netzen vorkommt. Für diese Einsatzfälle ist die erfindungsgemäße Schutzvorrichtung besonders bevorzugt ausgebildet und einsetzbar.

Die Erfindung ist jedoch nicht auf einen Einsatz mit einer Energiequelle, die zum Liefern wenigstens einer Gleichspannung eingerichtet ist, eingeschränkt, vielmehr ist eine bevorzugte Weiterbildung der erfindungsgemäßen Schutzvorrichtung dadurch gekennzeichnet, dass die wenigstens eine Energiequelle zum Liefern wenigstens einer Wechselspannung eingerichtet ist, durch die der wenigstens einen Last Energie von der wenigstens einen Energiequelle zuführbar ist, und dass bevorzugt eine Gleichrichterstufe vorgesehen ist zum Speisen der wenigstens einen Quellenschutzstufe aus der wenigstens einen Energiequelle. Die erfindungsgemäße Schutzvorrichtung kann dann für den Betrieb sowohl von mit Gleichspannung betriebenen Energieversorgungseinrichtungen als auch von mit Wechselspannung betriebenen Energieversorgungseinrichtungen identisch ausgebildet sein, wodurch eine universelle Einsatzmöglichkeit bei vereinfachter und verbilligter Herstellung gegeben ist. Auch ist ein Einsatz in Energieversorgungseinrichtungen möglich, die für einen Mischbetrieb in der Weise ausgebildet sind, dass ein Teil der Energieversorgungseinrichtung mit Wechselspannung, ein anderer Teil mit Gleichspannung betrieben wird.

Die oben genannte Aufgabe wird weiterhin gelöst durch eine elektrische Energieversorgungseinrichtung, die mit einer Schutzvorrichtung der vorstehend beschriebenen Art ausgestattet ist. Die Energieversorgungseinrichtung, die mit
- wenigstens einer Energiequelle, insbesondere wenigstens einer Energiequelle mit geringer Überstromfähigkeit,
- einer Energieübertragungseinrichtung mit wenigstens einem Netzstrang und
- an jedem Netzstrang wenigstens einer daran angeschlossenen Last
   ausgebildet ist, umfasst also weiterhin insbesondere wenigstens:
- je Netzstrang eine Lastschutzstufe, über die die wenigstens eine Last angeschlossen ist,
- eine Quellenschutzstufe zum Abschalten der Energiequelle bei Unter- oder Überspannung an der Energiequelle,
- in jeder Lastschutzstufe eine Messeinrichtung zum Detektieren eines Strangstroms und einer Lastspannung sowie eine Schaltvorrichtung zum Trennen des Netzstrangs von der Energiequelle, wenn der Strangstrom einen vorgebbaren Grenzwert überschreitet, und
- wenigstens eine zentrale Steuerstufe zum für jeden Netzstrang Vergleichen der Lastspannung mit einer Quellenspannung und zum selektiven Trennen derjenigen Netzstränge, in denen zwischen der Lastspannung und der Quellenspannung eine Abweichung vorbestimmter Größe auftritt.

Die erfindungsgemäße elektrische Energieversorgungseinrichtung weist damit alle Eigenschaften und Vorteile auf, die vorstehend zu der erfindungsgemäßen Schutzvorrichtung aufgeführt und erläutert sind.

### Kurze Beschreibung der Zeichnungen

In der Zeichnung, in der übereinstimmende Elemente in allen Figuren mit denselben Bezugszeichen versehen sind und zu der auf eine wiederholte Beschreibung dieser Elemente verzichtet wird, zeigen:
- Figur 1: ein Beispiel für eine elektrische Energieversorgungseinrichtung, die mit einem ersten Ausführungsbeispiel einer erfindungsgemäßen Schutzvorrichtung ausgebildet ist, in blockschematischer Darstellung,
- Figur 2: ein Beispiel einer Ausgestaltung einer Quellenschutzstufe für einen Einsatz in einem Ausführungsbeispiel einer erfindungsgemäßen Schutzvorrichtung in blockschematischer Darstellung,
- Figur 3: ein Beispiel für eine elektrische Energieversorgungseinrichtung, die mit einem zweiten Ausführungsbeispiel einer erfindungsgemäßen Schutzvorrichtung ausgebildet ist, in blockschematischer Darstellung,
- Figur 4: ein Ausführungsbeispiel für eine Lastschutzstufe zum Einsatz im ersten Ausführungsbeispiel der erfindungsgemäßen Schutzvorrichtung in blockschematischer Darstellung,
- Figur 5: eine grob schematische Darstellung eines Beispiels für eine Erkennung eines hochohmigen Kurzschlusses und/oder Isolationsfehlers in einem einfachen Beispiel für eine elektrische Energieversorgungseinrichtung, in der ein Netzstrang aus zwei voneinander unabhängigen Energiequellen gespeist wird, und
- Figur 6: das Beispiel der in Figur 1 in blockschematischer Darstellung wiedergegebenen elektrischen Energieversorgungseinrichtung, die mit dem ersten Ausführungsbeispiel der erfindungsgemäßen Schutzvorrichtung ausgebildet ist, mit einer grob schematischen, symbolischen Darstellung in der Energieversorgungseinrichtung hauptsächlich auftretender, von der Schutzvorrichtung erkennbarer Fehler.

Die in der Zeichnung dargestellten Ausführungsbeispiele der Erfindung werden im nachfolgenden näher beschrieben.

### Bevorzugte Ausführungsform der Erfindung

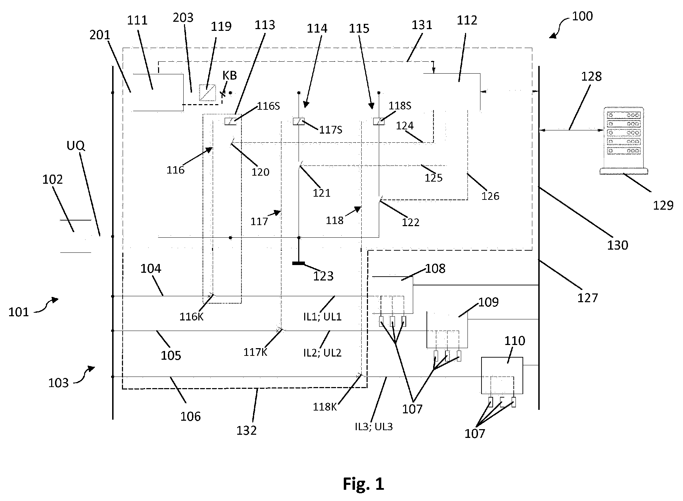

In Figur 1 ist ein erstes Ausführungsbeispiel einer erfindungsgemäßen Schutzvorrichtung in blockschematischer Darstellung wiedergegeben und mit dem Bezugszeichen 100 bezeichnet. Die Schutzvorrichtung 100 ist in einer hier beispielhaft in einer einfachen Ausgestaltung angenommenen, elektrischen Energieversorgungseinrichtung 101 eingesetzt. Die Energieversorgungseinrichtung 101 umfasst eine Energiequelle 102, hier insbesondere eine Energiequelle 102 mit geringer Überstromfähigkeit, wie z.B. eine mit wenigstens einer Brennstoffzelle oder wenigstens einem Photovoltaikelement oder dergleichen ausgebildete Energiequelle 102. Derartige Energiequellen 102 weisen eine Strom-Spannungs-Kennlinie auf, die einen sehr steil abfallenden Kennlinienast oberhalb eines Nennstroms zeigt, d.h. beim Erhöhen eines aus der Energiequelle 102 gezogenen Stroms über den Nennstrom hinaus sinkt die Spannung an der Energiequelle 102, d.h. die Quellenspannung UQ, sehr stark ab und geht schon bei einem geringen Überschreiten des Nennstroms gegen Null. Ein charakteristischer Wert für eine geringe Überstromfähigkeit liegt z.B. bei einem Rückgang der Quellenspannung UQ auf Null, wenn der Nennstrom der Energiequelle 102 um 20% überschritten wird. Dagegen erbringen konventionelle Energiequellen, z.B. als Stromgeneratoren betriebene elektrische Maschinen, kurzzeitig ein Mehrfaches ihres Nennstroms als Überstrom, weisen also eine hohe Überstromfähigkeit auf, so dass diese Energiequellen mit hoher Überstromfähigkeit durch herkömmliche Leitungssicherungen, insbesondere herkömmliche Sicherungsautomaten, abgesichert werden können. Eine Absicherung z.B. mit herkömmlichen Haushalts-Sicherungsautomaten erfordert einen Überstrom z.B. in der Größenordnung vom Zwei- bis Dreifachen des Nennstroms.

Die Energieversorgungseinrichtung 101 umfasst weiterhin eine Energieübertragungseinrichtung 103 mit einem ersten, einem zweiten und einem dritten Netzstrang 104, 105 bzw. 106. An jedem der Netzstränge 104, 105 bzw. 106 ist wenigstens eine Last angeschlossen; in der Darstellung des Beispiels nach Figur 1 sind es je drei Lasten 107.

Die für diese elektrische Energieversorgungseinrichtung vorgesehene Schutzvorrichtung 100 enthält zu jedem Netzstrang 104, 105 bzw. 106 eine Lastschutzstufe, d.h. eine erste, zweite und dritte Lastschutzstufe 108, 109 bzw. 110, über die die Lasten 107 an den betreffenden Netzstrang 104, 105 bzw. 106 angeschlossen sind. In jeder der Lastschutzstufen 108, 109, 110 ist eine Messeinrichtung angeordnet zum Detektieren eines von der Energiequelle 102 in den betreffenden Netzstrang 104, 105 bzw. 106 gespeisten Strangstroms, d.h. eines ersten, zweiten bzw. dritten Strangstroms IL1, IL2 bzw. IL3. Die Messeinrichtungen in jeder der Lastschutzstufen 108, 109, 110 sind ferner eingerichtet zum Detektieren einer ersten, zweiten bzw. dritten Lastspannung UL1, UL2 bzw. UL3, d.h. derjenigen Spannung, die über die betreffende Lastschutzstufe 108, 109 bzw. 110 an den Lasten 107, die an dem betreffenden Netzstrang 104, 105 bzw. 106 angeschlossen sind, anliegt. Weiterhin ist in jeder der Lastschutzstufen 108, 109, 110 je eine Schaltvorrichtung vorgesehen, die zum Trennen des betreffenden Netzstrangs 104, 105 bzw. 106 von der Energiequelle 102 dient, wenn der betreffende Strangstrom IL1, IL2 bzw. IL3 einen vorgebbaren Grenzwert überschreitet. Hierbei erfolgt also nur ein teilweiser, auf fehlerhafte Netzstränge begrenzter Lastabwurf. Die Messeinrichtung sowie die Schaltvorrichtung sind nachstehend noch weiter beschrieben.

Ferner enthält die Schutzvorrichtung 100 eine Quellenschutzstufe 111, die zum Abschalten der Energiequelle 102 bei Unter- oder Überspannung an der Energiequelle 102 eingerichtet ist, d.h. in dem Fall, in dem die Quellenspannung UQ einen ersten Schwellenwert unter- oder einen zweiten Schwellenwert überschreitet. In diesem Fall werden in der Energieversorgungseinrichtung 101 nach Figur 1 sämtliche Netzstränge 104, 105, 106 von der Energiequelle 102 getrennt, es erfolgt also ein vollständiger Lastabwurf. Ein Beispiel für einen Aufbau und eine Wirkungsweise einer derartigen Quellenschutzstufe 111 ist nachfolgend noch näher erläutert.

Außerdem enthält die Schutzvorrichtung 100 eine zentrale Steuerstufe 112, die eingerichtet ist, für jeden der Netzstränge 104, 105 bzw. 106 die in diesem Netzstrang 104, 105 bzw. 106 anliegende Lastspannung UL1, UL2 bzw. UL3 mit der Quellenspannung UQ zu vergleichen und diejenigen der Netzstränge 104, 105, 106, in denen zwischen der Lastspannung UL1, UL2 bzw. UL3 und der Quellenspannung UQ eine Abweichung vorbestimmter Größe auftritt, selektiv zu trennen. Hierbei erfolgt also wiederum nur ein teilweiser, auf fehlerhafte Netzstränge begrenzter Lastabwurf.

Für das Zu- und Abschalten der Netzstränge 104, 105 bzw. 106 ist die Schutzvorrichtung 100 mit je einer zweiten Schaltvorrichtung 113, 114 bzw. 115 für jeden der Netzstränge 104, 105 bzw. 106 ausgebildet. Jede der zweiten Schaltvorrichtungen 113, 114 bzw. 115 umfasst je ein Relais 116, 117 bzw. 118 mit je einer Relaisspule 116S, 117S bzw. 118S und je einem Schaltkontakt 116K, 117K bzw. 118K. In jeder der zweiten Schaltvorrichtungen 113, 114 bzw. 115 ist die Relaisspule 116S, 117S bzw. 118S einseitig an einen Ausgangsanschluss 203 der Quellenschutzstufe 111 angeschlossen. Im dargestellten Ausführungsbeispiel ist diese Verbindung über einen Gleichspannungswandler 119 ausgeführt, durch den die Quellenspannung UQ in eine Schutzkleinspannung zum Betrieb der Relais 116, 117 bzw. 118 und der zentralen Steuerstufe 112 umgewandelt wird. Anderseitig ist die Relaisspule 116S, 117S bzw. 118S über je ein Schalterelement 120, 121 bzw. 122, das ebenfalls Bestandteil der betreffenden zweiten Schaltvorrichtung 113, 114 bzw. 115 ist, mit Masse 123 verbunden. Die Schalterelemente 120, 121 bzw. 122 werden über Steuerleitungen 124, 125 bzw. 126 von der zentralen Steuerstufe 112 angesteuert und auf diese Weise betätigt.

Je einer der Schaltkontakte 116K, 117K bzw. 118K ist in je einem der Netzstränge 104, 105 bzw. 106 angeordnet zum Zu- bzw. Abschalten der Netzstränge 104, 105 bzw. 106 und damit der daran angeschlossenen Lasten 107 von der Energiequelle 102. Auf diese Weise wird erreicht, dass von der Quellenschutzstufe 111 über deren Ausgangsanschluss 203 alle Netzstränge104, 105 bzw. 106 zugleich, d.h. gemeinsam, zu- bzw. abgeschaltet werden, wohingegen von der zentralen Steuerstufe 112 über die Steuerleitungen 124, 125 bzw. 126 die Netzstränge 104, 105 bzw. 106 selektiv, d.h. einzeln, zu- bzw. abschaltbar sind.

Somit ist für jeden Netzstrang 104, 105 bzw. 106 je eine mit einem Relais 116, 117 bzw. 118 ausgebildete zweite Schaltvorrichtung 113, 114 bzw. 115 vorhanden, die durch die Quellenschutzstufe 111 der Energiequelle 102, aus der der betreffende Netzstrang 104, 105 bzw. 106 speisbar ist, über deren Ausgangsanschluss 203 steuerbar ist zum Verbinden des betreffenden Netzstrangs 104, 105 bzw. 106 mit der Energiequelle 102 bzw. zum Trennen des betreffenden Netzstrangs 104, 105 bzw. 106 von der Energiequelle 102 über die Schaltkontakte 116K, 117K bzw. 118K.

In der Anordnung nach Figur 1 ist eine Signalübertragungseinrichtung 127 vorgesehen zum Verbinden der zentralen Steuerstufe 112 und der Lastschutzstufen 108, 109, 110 miteinander. Die Signalübertragungseinrichtung 127 dient zum Übertragen der von der Messeinrichtung der Lastschutzstufen 108, 109, 110 detektierten Strangströme IL1, IL2 bzw. IL3, d.h. von deren Messwerten, und der von der Messeinrichtung der Lastschutzstufen 108, 109, 110 detektierten Lastspannungen UL1, UL2 bzw. UL3, d.h. ebenfalls von deren Messwerten, an die zentrale Steuerstufe 112. Die zentrale Steuerstufe 112 und die Lastschutzstufen 108, 109, 110 sind zur Verarbeitung und Übertragung der Messwerte mit je einer digitalen Signalverarbeitungseinrichtung, bevorzugt mit einem Mikroprozessor, d.h. einer programmierbaren Steuereinrichtung, ausgestaltet, wie nachfolgend noch näher erläutert ist.

In der Anordnung nach Figur 1 ist außerdem eine weitere Signalübertragungseinrichtung 128 vorgesehen, über die die zentrale Steuerstufe 112 mit weiteren, externen Signalverarbeitungseinrichtungen, insbesondere mit Einrichtungen zu einer Protokollierung von Betriebszuständen der Schutzvorrichtung 100 und/oder mit Einrichtungen zu einer Fernsteuerung und/oder Fernwartung, verbunden ist. Die weiteren, externen Signalverarbeitungseinrichtungen sind ebenfalls mit einer digitalen Signalverarbeitungseinrichtung, hier einem Zentralrechner 129, ausgebildet.

Die Signalübertragungseinrichtung 127 und die weitere Signalübertragungseinrichtung 128 sind in einem gemeinsamen Datenbus 130 zusammengefasst, der die Laststufen 108, 109, 110, die zentrale Steuerstufe 112 und den Zentralrechner 129 miteinander verbindet. Der Datenbus 130 ist nach an sich bekannten Bauformen und Standards ausgebildet. Damit ist nicht nur eine sehr einfache, leistungsfähige und schnelle Übertragung der Messwerte der detektierten Strangströme IL1, IL2, IL3 und der detektierten Lastspannungen UL1, UL2, UL3 an die zentrale Steuerstufe 112 möglich, umgekehrt kann auch eine Übertragung von Daten und/oder Steuerbefehlen von der zentralen Steuerstufe 112 an die Lastschutzstufen 108, 109, 110 oder zwischen der zentralen Steuerstufe 112 und wahlweise auch den Lastschutzstufen 108, 109, 110 einerseits und dem Zentralrechner 129 andererseits sehr einfach, leistungsfähig und schnell vorgenommen werden.

In der Schutzvorrichtung 100 gemäß Figur 1 ist ferner eine dritte Signalübertragungseinrichtung 131 vorgesehen zum Übertragen eines Messwertes der Quellenspannung UQ von der Quellenschutzstufe 111 an die zentrale Steuerstufe 112. Die Verbindung vom Ausgangsanschluss 203 der Quellenschutzstufe 111 an die zentrale Steuerstufe 112 kann dann ausschließlich einer Energieversorgung der zentralen Steuerstufe 112 aus der Energiequelle 102 über die Quellenschutzstufe 111 und den Gleichspannungswandler 119 dienen.

Vorteilhaft sind in der Energieversorgungseinrichtung 101 nach Figur 1 die Quellenschutzstufe 111, die zentrale Steuerstufe 112, die zweiten Schaltvorrichtungen 113, 114, 115 und der Gleichspannungswandler 119 in einer Baugruppe zusammengefasst, die hier als Schaltkasten bzw. Verteilerkasten 132 bezeichnet ist.

Die elektrische Energieversorgungseinrichtung 101 in der in Figur 1 dargestellten Ausführung ist der einfachen Darstellung halber mit einer Energiequelle 102 ausgebildet, die zum Abgeben einer als Gleichspannung ausgebildeten Quellenspannung UQ eingerichtet ist. Ebenso kann die Energiequelle 102 auch zum Abgeben einer als Wechselspannung ausgebildeten Quellenspannung UQ gestaltet sein, oder die Quellenspannung UQ kann eine Überlagerung einer Gleichspannung und einer Wechselspannung umfassen. Bei einer Wechselspannung als Quellenspannung UQ ist dann in der Energieübertragungseinrichtung 103 eine Gleichrichterstufe einzufügen, und zwar unmittelbar vor einem Eingangsanschluss 201 der Quellenschutzstufe 111, sofern nur die Schutzvorrichtung 100, insbesondere nur die Quellenschutzstufe 111, mit Gleichspannung gespeist werden soll. Ist dagegen vorgesehen, auch die Lasten 107 oder wenigstens einen Teil derselben mit Gleichspannung zu speisen, kann die genannte Gleichrichterstufe auch derart ausgebildet sein, dass von ihr sowohl die Schutzvorrichtung 100 als auch die betreffenden Lasten 107 gespeist werden. Auf diese Weise ist die erfindungsgemäße Schutzvorrichtung 100 sowohl mit Gleichspannungsquellen als auch mit Wechselspannungsquellen betreibbar.

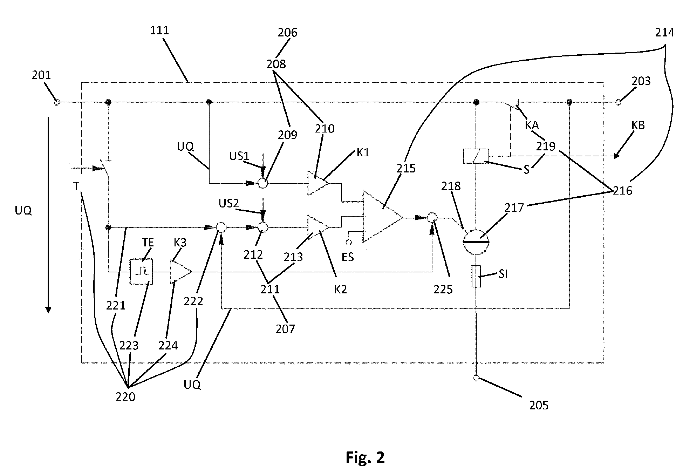

In Figur 2 ist ein Ausführungsbeispiel für eine Quellenschutzstufe 111 zum Einsatz in einer erfindungsgemäßen Schutzvorrichtung 100, insbesondere gemäß Figur 1, in blockschematischer Darstellung wiedergegeben. Die Quellenschutzstufe 111 weist einen Eingangsanschluss 201 zum Anschließen an die Energiequelle 102 und einen Ausgangsanschluss 203 auf, der allgemein zum Anschließen einer Last eingerichtet ist und an den somit auch eine Last wie die Lasten 107 angeschlossen werden kann. Bei der vorliegenden Schutzvorrichtung 100 sind an den Ausgangsanschluss 203 jedoch als Lasten die zentrale Steuerstufe 112 und die zweiten Schaltvorrichtungen 113, 114, 115 zu den Netzsträngen 104, 105 bzw. 106, nicht dagegen die Netzstränge 104, 105, 106 selbst, über den Gleichspannungswandler 119 angeschlossen, wie in Figur 1 dargestellt ist. Dabei ist der Eingangsanschluss 201 zum Verbinden mit einem Pluspol der Energiequelle 102 und ist der Ausgangsanschluss 203 zum Verbinden mit einem entsprechenden, positiven Eingangsanschluss des Gleichspannungswandlers 119 eingerichtet. In dieser Darstellung sind ein zweiter Eingangsanschluss und ein zweiter Ausgangsanschluss der Quellenschutzstufe 111 durch einen gemeinsamen, zum Anschließen an Masse 123 eingerichteten Masseanschluss 205 der Quellenschutzstufe 111 gebildet. Auch die Energiequelle 102, der Gleichspannungswandler 119, die zentrale Steuerstufe 112 und die zweiten Schaltvorrichtungen 113, 114, 115 gemäß Figur 1 sind mit Masse 123 verbunden; allerdings ist dies der Übersichtlichkeit und Vereinfachung halber nicht vollständig eingezeichnet. Durch die Ausbildung mit dem einen, gemeinsamen Masseanschluss 205 weist die Quellenschutzstufe 111 zusammen mit dem Eingangsanschluss 201 und dem Ausgangsanschluss 203 nur drei Anschlüsse auf. Über den Eingangsanschluss 201 und den Masseanschluss 205 ist der Quellenschutzstufe 111 die Quellenspannung UQ der Energiequelle 102 als eine Messgleichspannung zuführbar.

Die Quellenschutzstufe 111 umfasst eine Unterspannungs-Überwachungseinrichtung 206 zum Detektieren, ob die Quellenspannung, d.h. die Messgleichspannung, UQ einen ersten Schwellenwert US1 unterschreitet, und eine Überspannungs-Überwachungseinrichtung 207 zum Detektieren, ob die Messgleichspannung UQ einen zweiten Schwellenwert US2 überschreitet. Die Unterspannungs-Überwachungseinrichtung 206 ist dazu mit einer ersten Schwellenwertschaltung 208 ausgebildet, die eine erste Addierstufe 209 und eine erste Proportionalstufe 210 umfasst. In der ersten Addierstufe 209 wird die Messgleichspannung UQ mit dem ersten Schwellenwert US1 verglichen. Unterschreitet die Messgleichspannung UQ den ersten Schwellenwert US1, wird ein erstes Abschaltsignal über die erste Proportionalstufe 210 mit einem ersten Proportionalfaktor K1 abgegeben. Die Überspannungs-Überwachungseinrichtung 207 ist mit einer zweiten Schwellenwertschaltung 211 ausgebildet, die eine zweite Addierstufe 212 und eine zweite Proportionalstufe 213 umfasst. In der zweiten Addierstufe 212 wird die Messgleichspannung UQ mit dem zweiten Schwellenwert US2 verglichen. Überschreitet die Messgleichspannung UQ den zweiten Schwellenwert US2, wird ein zweites Abschaltsignal über die zweite Proportionalstufe 213 mit einem zweiten Proportionalfaktor K2 abgegeben.

Die Quellenschutzstufe 111 umfasst weiterhin eine von der Unterspannungs-Überwachungseinrichtung 206 und der Überspannungs-Überwachungseinrichtung 207 gesteuerte Schalteinrichtung 214 zum Herstellen einer elektrischen Verbindung zwischen der Energiequelle und der Last, wenn die Messgleichspannung UQ mindestens dem ersten US1 und höchstens dem zweiten Schwellenwert US2 entspricht. Die Schalteinrichtung 214 ist mit einer Komparatoranordnung 215, bevorzugt einer Differenzverstärkeranordnung, ausgebildet und umfasst weiterhin eine von der Komparatoranordnung 215 steuerbare Lastschalteinrichtung 216, die wiederum eine steuerbare Stromquellenanordnung 217 und einen von der Stromquellenanordnung 217 durch Zuführen eines Steuerstroms über einen Steueranschluss 218 der Stromquellenanordnung 217 steuerbaren, insbesondere elektromagnetischen, Lastschalter 219, hier ein Relais, umfasst. Das Relais 219 ist mit einer Relaisspule S und einem Schaltkontakt KA ausgebildet. Die Relaisspule S ist mit der Stromquellenanordnung 217 gekoppelt, und über den Schaltkontakt KA ist eine Verbindung zwischen dem Eingangsanschluss 201 und dem Ausgangsanschluss 203 herstellbar, die eine elektrische Verbindung zwischen der Energiequelle 102 und dem hier als eine Last der Quellenschutzstufe 111 fungierenden Gleichspannungswandler 119 bildet. Eine Sicherung SI ist in Reihe zur steuerbaren Stromquellenanordnung 217 geschaltet und dient zum Schutz der Relaisspule S und zum Schutz gegen Fehler in der Quellenschutzstufe 111.

Die von den Schwellenwertschaltungen 208, 211 an die Schalteinrichtung 214 dann gelieferten Abschaltsteuersignale, wenn die Messgleichspannung UQ den ersten Schwellenwert US1 unterschreitet bzw. den zweiten Schwellenwert US2 überschreitet, steuern die Komparatoranordnung 215 in einen zweiten Schaltzustand; ansonsten nimmt die Komparatoranordnung 215 einen ersten Schaltzustand ein. Die Stromquellenanordnung 217 wird von der Komparatoranordnung 215 derart gesteuert, dass der Steuerstrom dem Lastschalter 219 über den Steueranschluss 218 im ersten Schaltzustand der Komparatoranordnung 215 zuführbar ist und in deren zweitem Schaltzustand unterbrochen ist. Im ersten Schaltzustand der Komparatoranordnung 215 wird somit der Relaisspule S aus der Stromquellenanordnung 217 ein Strom zugeführt und damit über den Schaltkontakt KA die elektrische Verbindung zwischen der Energiequelle 102 und dem hier die Last der Quellenschutzstufe 111 bildenden Gleichspannungswandler 119 hergestellt. Tritt ein Abschaltsteuersignal auf, geht die Komparatoranordnung 215 in den zweiten Schaltzustand über, der Strom durch die Relaisspule S wird abgeschaltet, und die elektrische Verbindung zwischen der Energiequelle 102 und dem hier die Last der Quellenschutzstufe 111 bildenden Gleichspannungswandler 119 wird über ein Öffnen des Schaltkontakts KA unterbrochen.

Grundsätzlich benötigt das Relais 219 nur einen Schaltkontakt KA. Zur Erhöhung der Zuverlässigkeit kann jedoch ein zweites Relais hinzugefügt werden, dessen Relaisspule mit der Relaisspule S in Reihe geschaltet ist und dessen Schaltkontakt mit dem Schaltkontakt KA in Reihe angeordnet ist. Sofern eines der Relais versagt, insbesondere "klebt", wird die elektrische Verbindung zwischen der Energiequelle 102 und dem hier die Last der Quellenschutzstufe 111 bildenden Gleichspannungswandler 119 noch zuverlässig durch das zweite Relais unterbrochen.

Die Relais 116 bis 118 weisen eine Abschaltzeit auf, die vom zeitlichen Verlauf der ihren Relaisspulen 116S bis 118S zugeführten Spannung während des Abschaltens durch die Quellenschutzstufe 111 abhängig ist. Dieser zeitliche Verlauf ist jedoch abhängig von einer Kapazität eines Glättungskondensators am Ausgang des Gleichspannungswandlers 119 und der daran angeschlossenen Last, d.h. von der Anzahl der Relais 116 bis 118, insbesondere von der Anzahl derjenigen der Relais 116 bis 118, die gerade durch die zentrale Steuerstufe 112 eingeschaltet sind. Um eine davon unbeeinflusste Abschaltzeit zu erzielen, ist am Ausgang des Gleichspannungswandlers ein weiterer Schaltkontakt KB des Lastschalters 219 vorgesehen, der zugleich mit dem Schaltkontakt KA betätigt wird und einen definierten zeitlichen Verlauf der den Relaisspulen 116S bis 118S zugeführten Spannung und damit der Abschaltzeit gewährleistet.

Bei der Quellenschutzstufe 111 werden die Unterspannungs-Überwachungseinrichtung 206, die Überspannungs-Überwachungseinrichtung 207 und die Schalteinrichtung 214 ausschließlich aus der von der Energiequelle 102 abgebbaren Quellenspannung, d.h. der Messgleichspannung, UQ gespeist. Damit ist diese Quellenschutzstufe 111 als primärer Netzschutz einsetzbar.

Die Quellenschutzstufe 111 umfasst weiterhin eine Einschaltstufe 220, der ein Einschaltsignal durch eine externe Wirkverbindung zuführbar ist, die hier durch einen von einem Nutzer manuell extern bedienbaren Taster T gebildet ist. Durch das Einschaltsignal, hier einen mit dem Taster T auslösbaren Einschaltimpuls, wird die Schalteinrichtung 214 aus einem zweiten Steuerzustand, in dem die elektrische Verbindung zwischen der Energiequelle und der Last unterbrochen ist, in einen ersten Steuerzustand, in dem diese elektrische Verbindung hergestellt ist, überführt. Dabei ist der erste Steuerzustand der Schalteinrichtung 214 gleichbedeutend mit dem Steuerzustand, in den die Schalteinrichtung 214 durch die Komparatoranordnung 215 in deren erstem Schaltzustand überführt wird, und ist der zweite Steuerzustand der Schalteinrichtung 214 gleichbedeutend mit dem Steuerzustand, in den die Schalteinrichtung 214 durch die Komparatoranordnung 215 in deren zweitem Schaltzustand überführt wird.

In der Quellenschutzstufe 111 wird die Messgleichspannung UQ der zweiten Addierstufe 212 der zweiten Schwellenwertschaltung 211 über den Schaltkontakt KA und somit erst nach Herstellen der elektrischen Verbindung zwischen Energiequelle 102 und hier die Last der Quellenschutzstufe 111 bildendem Gleichspannungswandler 119 zugeführt. Vor dem Einschalten durch Zuführen des Einschaltsignals über den Taster T liegt also die Messgleichspannung UQ an der zweiten Schwellenwertschaltung 211 noch nicht an. Sie wird daher einerseits über den Schaltkontakt KA und andererseits durch den Taster T über eine Verbindung 221 einer Verknüpfungsstufe 222 zugeführt und von dieser der zweiten Addierstufe 212 zugeleitet. Damit steht die Messgleichspannung UQ auch zum Einschalten der Quellenschutzstufe 111 an der Überspannungs-Überwachungseinrichtung 207 zur Verfügung. Andererseits kann so erreicht werden, dass bei geöffnetem Schaltkontakt KA und somit Fehlen der Messgleichspannung UQ an der Überspannungs-Überwachungseinrichtung 207 stets ein Abschaltsteuersignal erzeugt wird und der Schaltkontakt KA sicher geöffnet bleibt, solange kein Einschaltsignal erzeugt wird. Dies schafft eine Sicherheit gegen unbeabsichtigte Inbetriebnahme oder auch Wiederinbetriebnahme der Quellenschutzstufe 111 und dem über sie gespeisten, hier die Last der Quellenschutzstufe 111 bildenden Gleichspannungswandler 119 und damit der Schutzvorrichtung 100 und der durch die Schutzvorrichtung 100 abgesicherten Energieversorgungseinrichtung 101.

Die Einschaltstufe 220 umfasst weiterhin eine Impulsformstufe 223, die beim Schließen des Tasters T einen Schaltimpuls einer Zeitdauer TE formt. Der Schaltimpuls der Zeitdauer TE wird über eine dritte Proportionalstufe 224 mit einem Faktor K3 einer weiteren Verknüpfungsstufe 225 zugeleitet und bildet auf diesem Weg zusätzlich zum Ausgangssignal der Komparatoranordnung 215 den Steuerstrom für die Stromquellenanordnung 217. Mit diesem Schaltimpuls wird für die Zeitdauer TE während des Einschaltens der Quellenschutzstufe 111 die Stromquellenanordnung 217 auf einen höheren Strom für die Relaisspule S umgeschaltet, um ein sicheres Anziehen des Relais 219 zu gewährleisten. Nach dem Ende des Schaltimpulses wird die Stromquellenanordnung 217 auf einen niedrigeren Strom geschaltet, der zum Halten des Relais 219 ausreicht.

Die Komparatoranordnung, d.h. die Differenzverstärkeranordnung, 215 weist einen weiteren Eingang für ein weiteres, insbesondere extern zuführbares, Steuersignal ES auf. Das weitere Steuersignal ES dient zum Steuern des Steuerzustands der Schalteinrichtung 214 über den Schaltzustand der Komparatoranordnung 215. Insbesondere ist das weitere Steuersignal ES ein weiteres Abschaltsteuersignal, durch das die Komparatoranordnung 215 in den zweiten Schaltzustand steuerbar ist. Damit lässt sich von der Quellenschutzstufe 111 eine weitere Schutzfunktion erfüllen, z.B. ein Abschalten bei einer Überhitzung eines Teils der Energieversorgungseinrichtung 101, wenn das weitere Steuersignal von einem Temperatursensor geliefert wird. Auch andere Betriebsparameter repräsentierende weitere Steuersignale ES sind möglich.

Die Quellenschutzstufe 111 nach Figur 2 ist einfach und robust aufgebaut und ermöglicht ein präzise determiniertes Abschalten der Netzstränge 104, 105, 106 mit den Lasten 107 von der Energiequelle 102 im Fehlerfall.

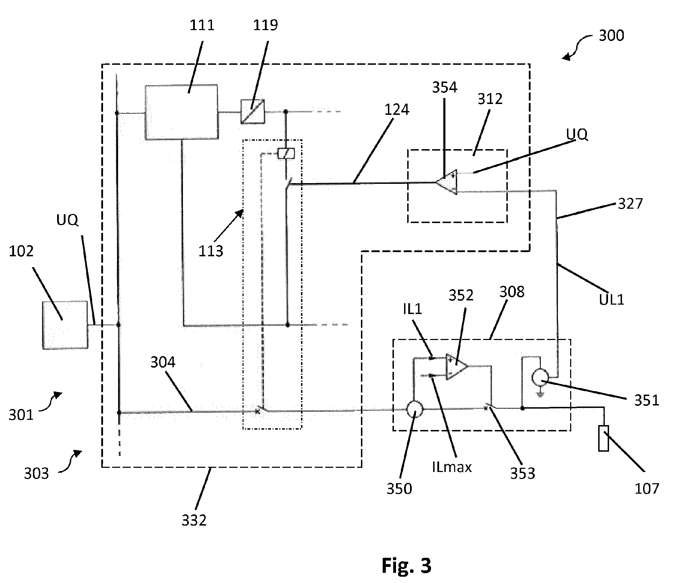

Figur 3 zeigt in blockschematischer Darstellung ein weiteres, mit dem Bezugszeichen 301 bezeichnetes Beispiel für eine elektrische Energieversorgungseinrichtung; diese ist mit einem zweiten Ausführungsbeispiel einer erfindungsgemäßen Schutzvorrichtung mit dem Bezugszeichen 300 ausgebildet. Die Energieversorgungseinrichtung 301 umfasst wieder die Energiequelle 102 sowie eine Energieübertragungseinrichtung 303. Die Energieübertragungseinrichtung 303 ist mit einem oder mehreren Netzsträngen ausgebildet; der Vereinfachung halber ist jedoch nur ein - erster - Netzstrang 304 dargestellt. An diesen ersten Netzstrang 304 ist eine Last 107 angeschlossen; auch hier ist der Vereinfachung halber auf eine Darstellung eines Anschlusses mehrerer Lasten 107 verzichtet worden. In die Verbindung des ersten Netzstrangs 304 mit der Last 107 ist eine erste Lastschutzstufe 308 sowie in schon zu Figur 1 beschriebener Weise eine zweite Schaltvorrichtung eingefügt, die mit der zweiten Schaltvorrichtung 113 zum ersten Netzstrang 104 der Energieübertragungseinrichtung 103 der Energieversorgungseinrichtung 101 gemäß Figur 1 identisch ist.

Im Gegensatz zu den mit bevorzugt digitalen Signalverarbeitungseinrichtungen ausgestalteten Baugruppen der Schutzvorrichtung 100 nach Figur 1 sind bei der Schutzvorrichtung 300 nach Figur 3 eine oder mehrere Lastschutzstufen und eine zentrale Steuerstufe vorgesehen, die mit einfachen Analogschaltungen ausgebildet sind und demgemäß auch nur einfache Funktionen ausüben können. In Figur 3 ist zum ersten Netzstrang 304 eine Lastschutzstufe 308 grob schematisch wiedergegeben, die eine Messeinrichtung zum Detektieren des Strangstroms IL1 und der Lastspannung UL1 im ersten Netzstrang 304 aufweist. Diese Messeinrichtung umfasst eine Strommesseinrichtung 350 zum Detektieren des Strangstroms IL1 und eine Spannungsmesseinrichtung 351 zum Detektieren der Lastspannung UL1. Ein Messwert des Strangstroms IL1 wird von der Strommesseinrichtung 350 einer hier als Differenzverstärker dargestellten Stromvergleichseinrichtung 352 zugeleitet, der andererseits auch ein vorgebbarer Grenzwert ILmax für den Strangstrom IL1 zugeführt wird. Die Lastschutzstufe 308 enthält weiterhin eine Schaltvorrichtung 353 zum Trennen des ersten Netzstrangs 304, d.h. der Last 107, von der Energiequelle 102, wenn der Strangstrom IL1 im ersten Netzstrang 304 den vorgebbaren Grenzwert ILmax überschreitet. Dazu ist ein Ausgang der Stromvergleichseinrichtung 352 in schaltungstechnischer Wirkverbindung, z.B. über eine Steuerleitung, mit der Schaltvorrichtung 353 verbunden.

Die zentrale Steuerstufe der Schutzvorrichtung 300, hier mit dem Bezugszeichen 312 versehen, enthält zu jedem Netzstrang eine Spannungsvergleichseinrichtung; zum ersten Netzstrang 304 ist hier eine Spannungsvergleichseinrichtung 354 wiedergegeben, ebenfalls dargestellt als Differenzverstärker. Der Spannungsvergleichseinrichtung 354 wird einerseits ein Messwert der Lastspannung UL1 über eine Signalübertragungseinrichtung 327, hier als einfache analoge Signalleitung ausgebildet, und andererseits die Quellenspannung UQ bzw. ein Messwert der Quellenspannung UQ zugeführt. Ein Ausgang der Spannungsvergleichseinrichtung 354 ist an die Steuerleitung 124 der zweiten Schaltvorrichtung 113 zum ersten Netzstrang 304 angeschlossen zum Steuern der zweiten Schaltvorrichtung 113 in der zu Figur 1 beschriebenen Weise.

Vorteilhaft sind auch in der Energieversorgungseinrichtung 301 nach Figur 3 die Quellenschutzstufe 111, die zentrale Steuerstufe 312, die zweite Schaltvorrichtung 113 und der Gleichspannungswandler 119 in einer Baugruppe als Schaltkasten bzw. Verteilerkasten 332 zusammengefasst.

Mit dem Ausführungsbeispiel nach Figur 3 können die erfindungsgemäßen Schutzfunktionen in sehr einfacher Weise wahrgenommen werden.

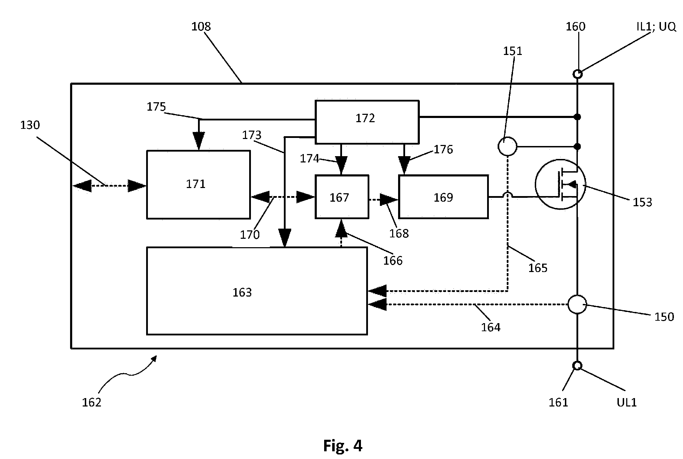

In Figur 4 ist in blockschematischer Darstellung ein Ausführungsbeispiel für eine Lastschutzstufe zum Einsatz im ersten Ausführungsbeispiel der erfindungsgemäßen Schutzvorrichtung 100 nach Figur 1 wiedergegeben, hier gezeigt am Beispiel der ersten Lastschutzstufe 108 im ersten Netzstrang 104 der Energieübertragungseinrichtung 103. Die erste Lastschutzstufe 108 weist eine Messeinrichtung auf, die eine Strommesseinrichtung 150 und eine Spannungsmesseinrichtung 151 umfasst. Ferner ist in der ersten Lastschutzstufe 108 eine Schaltvorrichtung 153 vorgesehen, die hier als Feldeffekttransistor ausgebildet ist. Die Strommesseinrichtung 150 und die Schaltvorrichtung 153 sind in einem Strompfad für den Strangstrom IL1 zwischen einem Strangstromeingang 160 und einem Strangstromausgang 161 in Reihenschaltung angeordnet. Dabei ist der Strangstromeingang 160 zum Verbinden mit der Energiequelle 102 und der Strangstromausgang 161 zum Verbinden mit einer oder mehreren Lasten 107 vorgesehen.

Die Lastschutzstufe 108 ist mit einer digitalen Signalverarbeitungseinrichtung 162 ausgestaltet, die mit einem Mikroprozessor 163 ausgebildet ist. Der Mikroprozessor 163 ist über eine erste Messleitung 164 mit der Strommesseinrichtung 150 zum Zuführen der Messwerte für den Strangstrom IL1 und über eine zweite Messleitung 165 mit der Spannungsmesseinrichtung 151 zum Zuführen der Messwerte für die Lastspannung UL1 verbunden. Der Mikroprozessor 163 ist dazu eingerichtet, den von der Strommesseinrichtung 150 detektierten Strangstrom IL1 und/oder die von der Spannungsmesseinrichtung 151 detektierte Lastspannung UL1, bevorzugt deren Augenblickswerte und/oder deren zeitliche Verläufe, auszuwerten und daraus einen Fehlerstrom im ersten Netzstrang 104 zu erkennen. Der Mikroprozessor 163 ist ferner dazu eingerichtet, auf Grundlage dieser Messwerte oder auf Grundlage einer Folge dieser Messwerte eine Überstromerkennung mit Überstromschutz einschließlich einer Kurzschlusserkennung sowie hier zusätzlich eine Überspannungserkennung mit Überspannungsschutz auszuführen. Ferner ist der Mikroprozessor 163 dazu eingerichtet, mit Hilfe eines integrierten Temperatursensors einen Überhitzungsschutz zur Verfügung zu stellen. Über einen Datenausgang 166 sind vom Mikroprozessor 163 entsprechende Daten, die wenigstens Messwerte des detektierten Strangstroms IL1 und/oder der detektierten Lastspannung UL1 umfassen, und ferner Steuerbefehle zum Steuern wenigstens der Schaltvorrichtung 153 der Lastschutzstufe 108 abgebbar.

Der Datenausgang 166 des Mikroprozessors 163 ist zu diesem Zweck mit einer Steuerlogikschaltung 167 verbunden, durch die die Daten und/oder Steuerbefehle je nach ihrem Zweck über eine Steuerleitung 168 einer Treiberschaltung 169 zum Steuern der Schaltvorrichtung 153 und/oder über eine Datenleitung 170 an eine Datenbus-Schnittstellenschaltung 171 geleitet werden können. Umgekehrt können auch Daten und/oder Steuerbefehle von der Datenbus-Schnittstellenschaltung 171 über die Datenleitung 170 an die Steuerlogikschaltung 167 geleitet und von dort dem Mikroprozessor 163 und/oder der Treiberschaltung 169 zugeführt werden. Die Datenbus-Schnittstellenschaltung 171 ist außerdem mit dem Datenbus 130 verbunden zum Austausch von Daten und/oder Steuerbefehlen mit der zentralen Steuerstufe 112 und/oder dem Zentralrechner 129.

Die zentrale Steuerstufe 112, mit der die digitale Signalverarbeitungseinrichtung 162 der Lastschutzstufe 108 über den Datenbus 130 Daten und/oder Steuerbefehle austauscht, weist ebenfalls eine Signalverarbeitungseinrichtung auf, die eingerichtet ist für
- ein Steuern eines Verbindens und/oder Trennens der wenigstens einen Last 107 mit bzw. von der Energiequelle 102 in Abhängigkeit von einer verfügbaren Leistungsabgabe der Energiequelle 102,
- ein Erkennen hochohmiger Kurzschlüsse und/oder Isolationsfehler im ersten Netzstrang 104 auf Grundlage eines vorgegebenen Leitungswiderstands des ersten Netzstrangs 104, des gemessenen Strangstroms ILlund der gemessenen Lastspannung UL1, sowie
- ein Erkennen gegenüber einem Sollzustand veränderter Impedanzen und/oder von Unterbrechungen im ersten Netzstrang 104.

Schließlich umfasst die Lastschutzstufe 108 eine Stromversorgungsschaltung 172 zum Ableiten wenigstens einer Versorgungsspannung für den Mikroprozessor 163, die Steuerlogikschaltung 167, die Datenbus-Schnittstellenschaltung 171 und die Treiberschaltung 169 aus der Quellenspannung UQ. Im dargestellten Beispiel der Lastschutzstufe 108 werden der Mikroprozessor 163, die Steuerlogikschaltung 167 und die Datenbus-Schnittstellenschaltung 171 über Versorgungsleitungen 173, 174 bzw. 175 mit einer ersten Versorgungsgleichspannung von 5 Volt gespeist, und die Treiberschaltung 169 wird über eine Versorgungsleitung 176 mit einer zweiten Versorgungsgleichspannung von 24 Volt gespeist.

In einer Abwandlung der vorbeschriebenen und auch mit der Lastschutzstufe 108 durchführbaren Überwachung der Strangströme, z.B. hier des Strangstroms IL1 im ersten Netzstrang 304, auf Überschreiten des vorgebbaren Grenzwerts ILmax kann auch eine Überwachung mit Sicherungskurven vorgenommen werden, die als sogenannte I²t-Kurven insbesondere in Halbleiter-Leistungssteuerungen von Flugzeugbordnetzen verwendet werden. Derartige Sicherungskurven lassen sich sehr einfach mit einer dementsprechenden Programmierung des Mikroprozessors 163 verwirklichen.

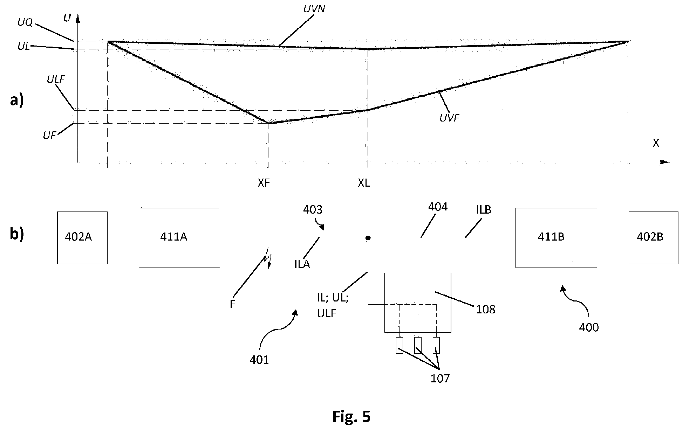

Figur 5 zeigt in grob schematischer Darstellung ein Beispiel für eine Erkennung eines hochohmigen Kurzschlusses und/oder Isolationsfehlers in einem einfachen, dritten Ausführungsbeispiel einer erfindungsgemäßen Schutzvorrichtung 400, eingesetzt in einem dritten Ausführungsbeispiel für eine elektrische Energieversorgungseinrichtung 401. Wie in Figur 5 im Figurenteil b) abgebildet, umfasst die elektrische Energieversorgungseinrichtung 401 eine hier nur mit einem einzigen Netzstrang 404 dargestellte Energieübertragungseinrichtung 403. Der Netzstrang 404 wird aus zwei voneinander unabhängigen Energiequellen 402A, 402B gespeist, und zwar von einer ersten 402A der Energiequellen über eine erste Schutz- und Steuerstufe 411A und von einer zweiten 402B der Energiequellen über eine zweite Schutz- und Steuerstufe 411B. Die erste Schutz- und Steuerstufe 411A und die zweite Schutz- und Steuerstufe 411B umfassen je eine Quellenschutzstufe, je eine zentrale Steuerstufe, je eine zweite Schaltvorrichtung und vorzugsweise je einen Gleichspannungswandler, die gemäß der Quellenschutzstufe 111 bzw. der zentralen Steuerstufe 112 bzw. der zweiten Schaltvorrichtung 113 bzw. dem Gleichspannungswandler 119 nach den Figuren 1 und 2 ausgebildet und elektrisch sowie bevorzugt auch räumlich gemäß den Figuren 1 und 2 miteinander verbunden sind. Entlang einer räumlichen Erstreckung X des Netzstrangs 404, dargestellt entlang der Abszisse im Diagramm des Figurenteils a) der Figur 5, ist an einem Ort XL über eine Lastschutzstufe 108, die in ihrem Aufbau derjenigen gemäß den Figuren 1 und 4 entspricht, eine Anzahl von Lasten 107 - hier drei Lasten 107 - angeschlossen. Die Schutzvorrichtung 400 umfasst hier also die erste Schutz- und Steuerstufe 411A, die zweite Schutz- und Steuerstufe 411B und die Lastschutzstufe 108; von einer Darstellung weiterer Elemente der Schutzvorrichtung 400 ist aus Gründen der Übersichtlichkeit abgesehen worden.

Auf der Ordinate des Diagramm des Figurenteils a) der Figur 5 ist über der räumlichen Erstreckung X des Netzstrangs 404 die am Netzstrang 404 anliegende Spannung U aufgetragen. Diese Spannung U hat bei Nennbetrieb, d.h. bei fehlerfreiem, bestimmungsgemäßem Betrieb aller Bestandteile der elektrischen Energieversorgungseinrichtung 401, einen mit UVN bezeichneten räumlichen Verlauf entlang der räumlichen Erstreckung X des Netzstrangs 404. Gemäß dem vorliegend durch die Lastschutzstufe 108 an die Lasten 107 gelieferten Strangstrom IL, von dem einer erster Anteil ILA aus der ersten Energiequelle 402A und ein zweiter Anteil ILB aus der zweiten Energiequelle 402B in den Netzstrang 404 eingespeist wird, den Leitungswiderständen im Netzstrang 404 und den Impedanzen der Lasten 107 stellt sich an der Lastschutzstufe 108 und damit den Lasten 107 eine Lastspannung UL ein, die im Rahmen tolerierter Leitungsverluste im Netzstrang 404 geringer als die von beiden Energiequellen 402A, 402B in identischer Höhe gelieferte Quellenspannung UQ ist.

Als Fehlerfall wird nun angenommen, dass als Fehler F ein hochohmiger Kurzschluss, z.B. gegen Masse 123, am Ort XF entlang der räumlichen Erstreckung X des Netzstrangs 404 vorliegt. Durch diesen Fehler F tritt ein Kurzschlussstrom auf, der zu gegenüber dem Nennbetrieb vergrößerten Strangströmen IL, ILA bzw. ILB führt. Es ist für diesen Fehlerfall vereinfachend angenommen, dass der Kurzschlussstrom von den Energiequellen 402A, 402B noch ohne Einbrechen ihrer Quellenspannung UQ geliefert werden kann. Damit stellt sich aufgrund der Leitungswiderstände im Netzstrang 404, der Impedanzen der Lasten 107 und der Impedanz des hochohmigen Kurzschlusses F ein mit UVF bezeichneter räumlicher Verlauf der entlang der räumlichen Erstreckung X am Netzstrang 404 anliegenden Spannung U ein. Dieser räumliche Verlauf UVF der Spannung U weist einen gegenüber dem Nennbetrieb verringerten Wert ULF der Spannung UL an der Lastschutzstufe 108 auf sowie eine demgegenüber noch einmal um eine weitere Spannungsdifferenz geringere Spannung UF am Ort XF des Fehlers F, wobei diese weitere Spannungsdifferenz durch einen von der zweiten Energiequelle 402B gelieferten Anteil des Kurzschlussstroms bestimmt ist. Mit anderen Worten weist der Verlauf UVF der Spannung U im Fehlerfall gegenüber dem Verlauf UVN im Nennbetrieb einen vergrößerten Spannungstrichter auf, der von der Lastschutzstufe 108 mit Hilfe der Strommesseinrichtung 150 und der Spannungsmesseinrichtung 151 und/oder von wenigstens einer der Schutz- und Steuerstufen 411A, 411B detektiert werden kann. Hier beispielsweise von der Lastschutzstufe 108 wird dann ein Abschalten des Netzstrangs 404 veranlasst. Wenn bevorzugt die Strommesseinrichtung 150 und die Spannungsmesseinrichtung 151 Messungen in sehr kurzen Zeitabständen, d.h. mit hoher Abtastrate, durchführen, können Fehler sehr schnell erkannt werden und können somit außer kontinuierlichen Fehlern F auch zeitlich impulsartig auftretende Fehler F von der Lastschutzstufe 108 erkannt werden. Außerdem kann mit Hilfe des Mikroprozessors 163 eine Frequenzanalyse der Lastspannung UL bzw. des Strangstroms IL vorgenommen und damit insbesondere deren niedrige Harmonische erfasst werden. Mit diesem Ergebnis, d.h. mit einer Detektion von Veränderungen in den Harmonischen der Lastspannung UL bzw. des Strangstroms IL, können weitere Fehler in der elektrischen Energieversorgungseinrichtung 101 bzw. 401 erkannt werden, und zwar bevorzugt Fehler in Eingangsfiltern von mit elektronischen Bauelementen ausgebildeten Lasten 107.

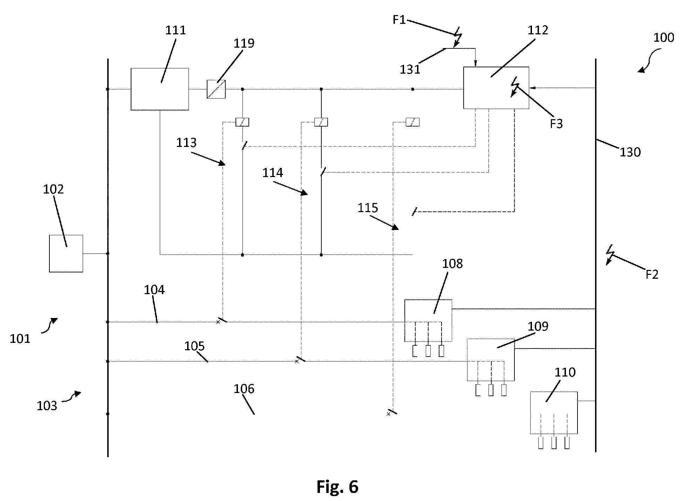

Die erfindungsgemäße Schutzvorrichtung 100 weist über die vorstehend erläuterten Merkmale und Funktionen hinaus auch eine hohe Eigensicherheit auf, d.h. es werden auch Fehler erkannt, die in der Schutzvorrichtung 100 selbst auftreten. In Figur 6 sind am Beispiel der hier vereinfacht wiedergegebenen elektrischen Energieversorgungseinrichtung 101 mit der Schutzvorrichtung 100 gemäß Figur 1 drei hauptsächliche derartige Fehler, die in der Schutzvorrichtung 100 selbst auftreten und von der Schutzvorrichtung 100 auch selbst erkannt werden, grob schematisch symbolisch dargestellt.

Als ein mit dem Bezugszeichen F1 bezeichneter, erster Fehler in der Schutzvorrichtung 100 wird hier eine Störung bzw. ein Versagen der Messung der Quellenspannung UQ in der Quellenschutzstufe 111 und/oder eine Störung der Übertragung der Messwerte der Quellenspannung UQ über die dritte Signalübertragungseinrichtung 131 an die zentrale Steuerstufe 112 betrachtet. Beim Auftreten dieses Fehlers F1 liefert der in der zentralen Steuerstufe 112 für jeden der Netzstränge 104, 105 bzw. 106 durchgeführte Vergleich der ersten, zweiten bzw. dritten Lastspannung UL1, UL2 bzw. UL3 mit der Quellenspannung UQ eine Abweichung, die die vorbestimmte Größe überschreitet, und führt dieses Ergebnis hier somit zum Trennen aller Netzstränge 104, 105, 106 von der Energiequelle 102, da diese Abweichung in allen Netzsträngen 104, 105, 106 auftritt. Dieser Fehler F1 wird also im Ergebnis vergleichbar mit einer Detektion einer Unterspannung an der Quellenschutzstufe 111 behandelt.

Als zweiter mit F2 bezeichneter Fehler in der Schutzvorrichtung 100 wird eine Störung bzw. Unterbrechung der Signalübertragung über den Datenbus 130 angenommen, wodurch der Austausch von Daten und/oder Steuerbefehlen zwischen der zentralen Steuerstufe 112 einerseits und den Lastschutzstufen 108, 109, 110 andererseits über den Datenbus 130 unterbrochen bzw. gestört ist. Insbesondere, wenn dadurch die Übertragung der Messwerte der ersten, zweiten bzw. dritten Lastspannung UL1, UL2 bzw. UL3 unterbrochen ist, kann ein Vergleich der ersten, zweiten bzw. dritten Lastspannung UL1, UL2 bzw. UL3 mit der Quellenspannung UQ nicht mehr stattfinden bzw. liefert eine derartige Abweichung von der vorbestimmten Größe, dass auch im Fall des zweiten Fehlers F2 alle Netzstränge 104, 105, 106 von der Energiequelle 102 getrennt werden. Wie auch bei anderen Ursachen, die zum durch die zentrale Steuerstufe 112 ausgelösten Trennen der Netzstränge 104, 105 bzw. 106 von der Energiequelle 102 führen, kann wahlweise auch hier ein Notbetrieb vorgesehen sein, indem ausgewählte der Netzstränge 104, 105 bzw. 106 vom Trennen ausgenommen werden, also mit der Energiequelle verbunden bleiben. In einem derartigen Notbetrieb arbeiten die Quellenschutzstufe 111 mit der zentralen Steuerstufe 112 einerseits und die Lastschutzstufen 108, 109, 110 andererseits ohne Signalübertragung untereinander je für sich autark.

Als dritter Fehler F3 in der Schutzvorrichtung 100 wird eine Störung bzw. Ausfall der zentralen Steuerstufe 112 angenommen, wodurch insofern eine zum Fehler F2 ähnliche Lage entsteht, als auch beim Auftreten des Fehlers F3 die Lastschutzstufen 108, 109, 110 ohne Signalübertragung untereinander und von bzw. zur zentralen Steuerstufe 112 jede für sich autark weiterarbeiten. Auch der Schutz der Energiequelle 102 durch die Quellenschutzstufe 111 ist weiterhin wirksam. In erster Linie ist lediglich die Überwachung der einzelnen Lastspannungen UL1, UL2 bzw. UL3 durch die zentrale Steuerstufe 112 außer Funktion, d.h. der für jeden Netzstrang 104, 105, 106 von der zentralen Steuerstufe 112 vorgenommene Vergleich der Lastspannung UL1, UL2 bzw. UL3 mit der Quellenspannung UQ und das selektive Trennen derjenigen Netzstränge 104, 105 bzw. 106, in denen zwischen der Lastspannung UL1, UL2 bzw. UL3 und der Quellenspannung UQ die beschriebene Abweichung vorbestimmter Größe auftritt. Bevorzugt kann aber auch diese Überwachung der einzelnen Lastspannungen UL1, UL2 bzw. UL3 in einem Notbetrieb von den einzelnen Lastschutzstufen 108, 109 bzw. 110 je für den betreffenden Netzstrang 104, 105 bzw. 106 wenigstens mit eingeschränkter Genauigkeit ausgeführt werden. Zwar ist durch den Fehler F3 die Übermittlung der aktuellen Messwerte für die Quellenspannung UQ unterbrochen, doch wird für den genannten Vergleich an Stelle dieses aktuellen Messwertes der Quellenspannung UQ vom Mikroprozessor 163 ein Ersatzwert für die Quellenspannung UQ herangezogen, vorzugsweise der letzte vor Auftreten des Fehlers F3 übertragene Wert der Quellenspannung UQ oder der letzte von der Spannungsmesseinrichtung 151 der Lastschutzstufen 108, 109 bzw. 110 detektierte Messwert der Lastspannung UL1, UL2 bzw. UL3 vor Auftreten des Fehlers F3.

Zusammengefasst wird somit durch die Erfindung eine Schutzvorrichtung für eine wenigstens eine Energiequelle, insbesondere mit geringer Überstromfähigkeit, eine Energieübertragungseinrichtung mit wenigstens einem Netzstrang und an jedem Netzstrang wenigstens eine angeschlossene Last umfassende elektrische Energieversorgungseinrichtung geschaffen, die selektiv eingegrenzte Bestandteile der Energieübertragungseinrichtung und die Energiequelle schützt, enthaltend je Netzstrang eine Lastschutzstufe, über die die wenigstens eine Last angeschlossen ist, eine Quellenschutzstufe zum Abschalten der Energiequelle bei Unter- oder Überspannung an der Energiequelle, in jeder Lastschutzstufe eine Messeinrichtung zum Detektieren eines Strangstroms und einer Lastspannung sowie eine Schaltvorrichtung zum Trennen des Netzstrangs von der Energiequelle, wenn der Strangstrom einen vorgebbaren Grenzwert überschreitet, und eine zentrale Steuerstufe zum für jeden Netzstrang Vergleichen der Lastspannung mit einer Quellenspannung und zum selektiven Trennen derjenigen Netzstränge, in denen zwischen der Lastspannung und der Quellenspannung eine Abweichung vorbestimmter Größe auftritt.

Die erfindungsgemäße Schutzvorrichtung bietet eine drei Schutzebenen umfassende, hierarchische Organisation des Schutzes der Elemente der elektrischen Energieversorgungseinrichtung, wobei auf einer ersten der Schutzebenen ein Schutz der Energiequelle zur Verfügung gestellt wird. Dieser Schutz arbeitet unabhängig von allen anderen Bestandteilen der elektrischen Energieversorgungseinrichtung und der Schutzvorrichtung und selbst bei deren Ausfall oder bei Ausfall etwaiger Hilfsspannungsversorgungen. Der Schutz der ersten Schutzebene eignet sich daher bevorzugt als primärer Netzschutz.

Auf einer zweiten der Schutzebenen wird durch die Lastschutzstufen ein Schutz der Netzstränge und der daran angeschlossenen Lasten vor lokal auftretenden Überströmen, durch die der Schutz der Energiequelle auf der ersten Schutzebene noch nicht anspricht und vor denen er folglich die Netzstränge und die daran angeschlossenen Lasten nicht schützen kann, zur Verfügung gestellt.

Auf einer dritten der Schutzebenen wird durch die zentrale Steuerstufe aus einer Auswertung von Strom- und Spannungsmesswerten der einzelnen Lastschutzstufen eine Detektion von Fehlern insbesondere in der Energieübertragungseinrichtung, d.h. in den Netzsträngen, vorgenommen.

Die erfindungsgemäße Schutzvorrichtung ermöglicht zugleich einen Schutz der Bestandteile der Energieversorgungseinrichtung, eine Funktionsüberwachung der Bestandteile der Energieversorgungseinrichtung und der Schutzvorrichtung sowie ein sogenanntes Leistungsmanagement in der Energieversorgungseinrichtung. Ein flexibler Einsatz für Energieversorgungseinrichtungen mit unterschiedlichen Netzfrequenzen, d.h. mit Gleich- oder Wechselspannungen als Quellenspannungen, ist möglich. Auch ein Einsatz bei im Betrieb variablen Netzfrequenzen ist möglich. Durch einen modularen Aufbau der Schutzvorrichtung werden Bauraum, Gewicht, Fertigungsaufwand und Ersatzteil-Lagerhaltung verringert. Eine einfache und wirkungsvolle Funktionsüberwachung von Energieversorgungseinrichtungen und zugehörigen bzw. damit verbundenen Betriebsmitteln, Energiequellen bzw. Energieerzeugern und Energieverbrauchern ist möglich. Dazu werden insbesondere alle detektierten Strom- und Spannungsmesswerte protokolliert.

Besonders bevorzugt lassen sich in mit Gleichspannung als Quellenspannung betriebenen Energieversorgungseinrichtungen Kurzschlüsse durch defekte - z.B. durchgescheuerte - Isolierungen erkennen, die zu länger brennenden Lichtbögen führen. Diese Lichtbögen können einerseits durch die von ihnen verursachten Überströme, bei geringen Lichtbogenströmen aber auch durch ihr charakteristisches Stromrauschen erkannt werden, welches bei einer in den Lastschutzstufen vorgenommenen Frequenzanalyse der Strommesswerte erfasst werden kann.

Die erfindungsgemäße Schutzvorrichtung ermöglicht somit einen sicheren Schutz der Bestandteile der Energieversorgungseinrichtung vor Unter- und Überspannungen sowie der Netzstränge und Lasten vor Überströmen, wobei das Trennen fehlerhafter Bestandteile der Energieversorgungseinrichtung von der Energiequelle auf ein Mindestmaß begrenzt bleibt, so dass einwandfreie Bestandteile der Energieversorgungseinrichtung nicht bzw. nur geringstmöglich von einem solchen Trennen betroffen werden. Für die Ausübung des Schutzes insbesondere der Netzstränge und Lasten können deren zulässige Stromstärken und die zulässigen Höchstdauern, während der diese zulässigen Stromstärken anliegen dürfen, um insbesondere Überhitzung zu vermeiden, Nennleistungen von Lasten nebst zugehörigen Toleranzen sowie Leitungswiderstände der Netzstränge sehr flexibel und präzise in den Signalverarbeitungseinrichtungen berücksichtigt und angepasst werden. Durch die Möglichkeit, insbesondere in der Quellenschutzstufe einen Wiederanlaufschutz gegen ungewolltes und unkontrolliertes Wiederanlaufen der Energieversorgungseinrichtung nach einem Abschalten durch einen Fehler vorzusehen, ist ein sicheres und geordnetes Wiederanlaufen möglich. Die Signalverarbeitungseinrichtungen lassen sich vorteilhaft mit einem sogenannten Montage-Modus ausbilden, d.h. einer Betriebsart, in der von den Signalverarbeitungseinrichtungen Soll- und Istwerte insbesondere detektierter Strom- und Spannungsmesswerte verglichen werden und daraus z.B. defekte Kabel durch ihre vom Sollwert abweichenden Impedanzen, aber auch fehlende, falsch angeschlossene, störende oder defekte Lasten schon bei der Installation erkannt werden können. Ferner besteht die Möglichkeit der Erkennung von Erdschlüssen oder sonstigen Fehlern in der Isolierung. Durch die Signalverarbeitungseinrichtungen der Schutzvorrichtung, vorteilhaft durch einen über einen Datenbus angeschlossenen Zentralrechner, lassen sich erkannte Fehler - insbesondere Isolierungsfehler, Überströme oder defekte Bestandteile der Energieversorgungseinrichtung und/oder auch der Schutzvorrichtung - laufend protokollieren. Alle diese Merkmale und Eigenschaften sind auf einfache Weise in Energieversorgungseinrichtungen an sich bekannter Art, wie z.B. Bordnetze von Land-, Luft und/oder Wasserfahrzeugen, integrieren.

Durch die weitgehende Verwendung elektronischer, d.h. Halbleiterbauteile beim Aufbau der erfindungsgemäßen Schutzvorrichtung wird eine hohe Vibrations- und Beschleunigungsfestigkeit erzielt, die dem Einsatz in Fahrzeugen entgegenkommt. Die Signalverarbeitungseinrichtungen der Schutzvorrichtung ermöglichen auch eine flexible Anpassung von Sollwerten bzw. Kenngrößen der Energieversorgungseinrichtung auf der Grundlage von Messwerten, die aus Messungen während eines als Normalbetrieb definierten Betriebszustands der Energieversorgungseinrichtung gewonnen worden sind. die Signalverarbeitungseinrichtungen der Schutzvorrichtung können so als lernende Systeme aufgebaut sein. Über den Zentralrechner ist weiterhin eine Fernsteuerung und Fernwartung möglich. Sind Batterien bzw. Akkumulatoren als Energiequellen in der Energieversorgungseinrichtung eingesetzt, lässt sich deren Ladezustand überwachen und somit eine Tiefentladung detektieren bzw. verhindern.

### Bezugszeichenliste

- 100: Schutzvorrichtung, erstes Ausführungsbeispiel
- 101: Elektrische Energieversorgungseinrichtung, erstes Ausführungsbeispiel
- 102: Energiequelle
- 103: Energieübertragungseinrichtung von 101
- 104: Erster Netzstrang von 103
- 105: Zweiter Netzstrang von 103
- 106: Dritter Netzstrang von 103
- 107: Last
- 108: Erste Lastschutzstufe zu 104
- 109: Zweite Lastschutzstufe zu 105
- 110: Dritte Lastschutzstufe zu 106
- 111: Quellenschutzstufe
- 112: Zentrale Steuerstufe zu 100
- 113: Zweite Schaltvorrichtung zu 104
- 114: Zweite Schaltvorrichtung zu 105
- 115: Zweite Schaltvorrichtung zu 106
- 116: Relais von 113
- 117: Relais von 114
- 118: Relais von 115
- 116K: Schaltkontakt von 116
- 117K: Schaltkontakt von 117
- 118K: Schaltkontakt von 118
- 116S: Relaisspule von 116
- 117S: Relaisspule von 117
- 118S: Relaisspule von 118
- 119: Gleichspannungswandler
- 120: Schalterelement von 113
- 121: Schalterelement von 114
- 122: Schalterelement von 115
- 123: Masse
- 124: Steuerleitung von 112 an 120
- 125: Steuerleitung von 112 an 121
- 126: Steuerleitung von 112 an 122
- 127: Signalübertragungseinrichtung
- 128: Weitere Signalübertragungseinrichtung
- 129: Zentralrechner
- 130: Datenbus, umfasst 127, 128
- 131: Dritte Signalübertragungseinrichtung
- 132: Schaltkasten / Verteilerkasten
- 150: Strommesseinrichtung der Messeinrichtung in 108
- 151: Spannungsmesseinrichtung der Messeinrichtung in 108

- 153: Schaltvorrichtung in 108

- 160: Strangstromeingang von 108
- 161: Strangstromausgang von 108
- 162: Digitale Signalverarbeitungseinrichtung von 108
- 163: Mikroprozessor von 162
- 164: Erste Messleitung von 150 an 163 für Messwerte von IL1
- 165: Zweite Messleitung von 151 an 163 für Messwerte von UL1
- 166: Datenausgang von 163
- 167: Steuerlogikschaltung von 162
- 168: Steuerleitung von 167 an 169
- 169: Treiberschaltung von 162 zum Steuern von 153
- 170: Datenleitung zwischen 167 und 171
- 171: Datenbus-Schnittstellenschaltung von 162
- 172: Stromversorgungsschaltung von 108
- 173: Versorgungsleitung für erste Versorgungsgleichspannung von 5 Volt von 172 an 163
- 174: Versorgungsleitung für erste Versorgungsgleichspannung von 5 Volt von 172 an 167
- 175: Versorgungsleitung für erste Versorgungsgleichspannung von 5 Volt von 172 an 171
- 176: Versorgungsleitung für zweite Versorgungsgleichspannung von 24 Volt von 172 an 169

- 201: Eingangsanschluss von 111

- 203: Ausgangsanschluss von 111

- 205: Gemeinsamer Masseanschluss von 111
- 206: Unterspannungs-Überwachungseinrichtung
- 207: Überspannungs-Überwachungseinrichtung
- 208: Erste Schwellenwertschaltung
- 209: Erste Addierstufe von 208
- 210: Erste Proportionalstufe von 208
- 211: Zweite Schwellenwertschaltung
- 212: Zweite Addierstufe von 211
- 213: Zweite Proportionalstufe von 211
- 214: Schalteinrichtung
- 215: Komparatoranordnung, bevorzugt Differenzverstärkeranordnung, von 214
- 216: Lastschalteinrichtung von 214
- 217: Stromquellenanordnung von 216
- 218: Steueranschluss von 217
- 219: Lastschalter, hier ein Relais, von 216
- 220: Einschaltstufe
- 221: Verbindung von 220
- 222: Verknüpfungsstufe von 220
- 223: Impulsformstufe von 220
- 224: Dritte Proportionalstufe von 220
- 225: Weitere Verknüpfungsstufe

- 300: Schutzvorrichtung, zweites Ausführungsbeispiel
- 301: Elektrische Energieversorgungseinrichtung, zweites Ausführungsbeispiel

- 303: Energieübertragungseinrichtung von 301
- 304: Erster Netzstrang zu 303

- 308: Lastschutzstufe von 300 zu 304

- 312: Zentrale Steuerstufe zu 300

- 327: Signalübertragungseinrichtung zu 300

- 332: Schaltkasten / Verteilerkasten

- 350: Strommesseinrichtung der Messeinrichtung in 308
- 351: Spannungsmesseinrichtung der Messeinrichtung in 308
- 352: Stromvergleichseinrichtung in 308
- 353: Schaltvorrichtung in 308
- 354: Spannungsvergleichseinrichtung in 312

- 400: Schutzvorrichtung, drittes Ausführungsbeispiel
- 401: Elektrische Energieversorgungseinrichtung, drittes Ausführungsbeispiel
- 402A: Erste Energiequelle von 401
- 402B: Zweite Energiequelle von 401
- 403: Energieübertragungseinrichtung von 401
- 404: Netzstrang von 403

- 411A: Erste Schutz- und Steuerstufe zu 402A
- 411B: Zweite Schutz- und Steuerstufe zu 402B

- ES: Weiteres (externes) Steuersignal
- F: Fehler, insbesondere hochohmiger Kurzschluss, am Ort XF entlang 404 in Figur 5
- F1: Erster Fehler in 100
- F2: Zweiter Fehler in 100
- F3: Dritter Fehler in 100

- IL: Strangstrom durch 108 in Figur 5
- IL1: Erster Strangstrom
- IL2: Zweiter Strangstrom
- IL3: Dritter Strangstrom
- ILA: Erster Anteil von IL, der von 402A in 404 eingespeist wird
- ILB: Zweiter Anteil von IL, der von 402B in 404 eingespeist wird
- ILmax: Grenzwert des Strangstroms

- KA: Schaltkontakt des Lastschalters 219
- KB: Weiterer Schaltkontakt des Lastschalters 219

- K1: Erster Proportionalfaktor
- K2: Zweiter Proportionalfaktor
- K3: Dritter Proportionalfaktor

- S: Relaisspule des Lastschalters 219

- SI: Sicherung in Reihe zur steuerbaren Stromquellenanordnung 217

- T: Taster von 220
- TE: Dauer des Zeitintervalls, d.h. des Schaltimpulses, mit dem während des Einschaltens der Quellenschutzstufe 111 die Stromquellenanordnung 217 auf einen höheren Strom für die Relaisspule S umgeschaltet wird

- U: Spannungsachse (Ordinate) im Diagramm nach Figur 5, Figurenteil a)
- UF: Spannung am Ort XF beim Auftreten des Fehlers F
- UL: Lastspannung an 108 und damit an 107 in Figur 5
- UL1: Erste Lastspannung
- UL2: Zweite Lastspannung
- UL3: Dritte Lastspannung
- ULF: Wert der Spannung UL an 108 beim Auftreten des Fehlers F
- UQ: Quellenspannung / Messgleichspannung
- UVN: Räumlicher Verlauf der Spannung U entlang X bei Nennbetrieb
- UVF: Räumlicher Verlauf der Spannung U entlang X beim Auftreten des Fehlers F am Ort XF
- US1: Erster Schwellenwert für die Messgleichspannung
- US2: Zweiter Schwellenwert für die Messgleichspannung

- X: Räumliche Erstreckung von 404: Abszisse im Diagramm Figur 5, Figurenteil a)
- XF: Ort entlang X, an dem der Fehler F in Figur 5 auftritt
- XL: Ort entlang X, an dem 107 über 108 an 404 angeschlossen ist

## Patentansprüche

1. Schutzvorrichtung (100, 300, 400) für eine
• wenigstens eine Energiequelle (102, 402A, 402B), insbesondere wenigstens eine Energiequelle (102, 402A, 402B) mit geringer Überstromfähigkeit,
• eine Energieübertragungseinrichtung (103, 303, 403) mit wenigstens einem Netzstrang (104, 105, 106, 304, 404) und
• an jedem Netzstrang (104, 105, 106, 304, 404) wenigstens eine daran angeschlossene Last (107), der Energie von der wenigstens einen Energiequelle (102, 402A, 402B) über den Netzstrang (104, 105, 106, 304, 404) zuführbar ist, umfassende elektrische Energieversorgungseinrichtung (101, 301, 401), enthaltend:
• je Netzstrang (104, 105, 106, 304, 404) eine Lastschutzstufe (108, 109, 110, 308), über die die wenigstens eine Last (107) am Netzstrang (104, 105, 106, 304, 404) angeschlossen ist,
• wenigstens eine Quellenschutzstufe (111) zum Abschalten der wenigstens einen Energiequelle (102, 402A, 402B) bei Vorliegen einer Unter- oder Überspannung an der Energiequelle (102, 402A, 402B);
• in jeder Lastschutzstufe (108, 109, 110, 308) eine Messeinrichtung (150, 151, 305, 351) zum Detektieren eines Strangstroms (IL, IL1, IL2, IL3) und einer Lastspannung (UL, UL1, UL2, UL3) sowie eine Schaltvorrichtung (153, 353) zum Trennen des Netzstrangs (104, 105, 106, 304, 404) von der Energiequelle (102, 402A, 402B), wenn der Strangstrom (IL, IL1, IL2, IL3) einen vorgebbaren Grenzwert überschreitet;
• wenigstens eine zentrale Steuerstufe (112, 312) wenigstens zum für jeden Netzstrang (104, 105, 106, 304, 404) Vergleichen der Lastspannung (UL, UL1, UL2, UL3) mit wenigstens einer von der wenigstens einen Energiequelle (102, 402A, 402B) abgebbaren Quellenspannung (UQ) und zum selektiven Trennen derjenigen Netzstränge (104, 105, 106, 304, 404) von der wenigstens einen Energiequelle (102, 402A, 402B), in denen zwischen der Lastspannung (UL, UL1, UL2, UL3) und der Quellenspannung (UQ) eine Abweichung vorbestimmter Größe auftritt.

2. Schutzvorrichtung (100, 300, 400) nach Anspruch 1, **dadurch gekennzeichnet, dass** zu jeder Energiequelle (102, 402A, 402B) wenigstens eine, bevorzugt genau eine, Quellenschutzstufe (111) vorgesehen ist.

3. Schutzvorrichtung (100, 300, 400) nach Anspruch 1 oder 2, **dadurch gekennzeichnet, dass** zu jeder Energiequelle (102, 402A, 402B) wenigstens eine, bevorzugt genau eine, zentrale Steuerstufe (112, 312) vorgesehen ist.

4. Schutzvorrichtung (100, 300, 400) nach Anspruch 1, 2 oder 3, **gekennzeichnet durch** für jeden des wenigstens einen Netzstrangs (104, 105, 106, 304, 404) je eine, insbesondere mit einem Relais (116, 117, 118) ausgebildete, zweite Schaltvorrichtung (113, 114, 115), die **durch** die wenigstens eine Quellenschutzstufe (111), insbesondere **durch** die Quellenschutzstufe (111) der Energiequelle (102, 402A, 402B), aus der der betreffende Netzstrang (104, 105, 106, 304, 404) speisbar ist, steuerbar ist zum Verbinden des betreffenden Netzstrangs (104, 105, 106, 304, 404) mit der Energiequelle (102, 402A, 402B) bzw. zum Trennen des betreffenden Netzstrangs (104, 105, 106, 304, 404) von der Energiequelle (102, 402A, 402B).

5. Schutzvorrichtung (100, 300, 400) nach einem oder mehreren der vorhergehenden Ansprüche, **dadurch gekennzeichnet, dass** eine Signalübertragungseinrichtung (127, 327) vorgesehen ist zum Verbinden wenigstens der wenigstens einen zentralen Steuerstufe (112, 312) und wenigstens einer der einen oder mehreren Lastschutzstufen (108, 109, 110, 308) miteinander zum Übertragen wenigstens eines von der Messeinrichtung (150, 151, 305, 351) der Lastschutzstufe (108, 109, 110, 308) bzw. Lastschutzstufen (108, 109, 110, 308) detektierten Strangstroms (IL, IL1, IL2, IL3) und/oder einer von der Messeinrichtung (150, 151, 305, 351) der Lastschutzstufe (108, 109, 110, 308) bzw. Lastschutzstufen (108, 109, 110, 308) detektierten Lastspannung (UL, UL1, UL2, UL3) an die wenigstens eine zentrale Steuerstufe (112, 312); insbesondere, dass eine mit einem Datenbus (130) ausgebildete Signalübertragungseinrichtung (127, 327) vorgesehen ist.

6. Schutzvorrichtung (100, 400) nach einem oder mehreren der vorhergehenden Ansprüche, **dadurch gekennzeichnet, dass** die wenigstens eine zentrale Steuerstufe (112) und/oder die wenigstens eine Lastschutzstufe (108, 109, 110) mit je wenigstens einer Signalverarbeitungseinrichtung (162), insbesondere digitalen Signalverarbeitungseinrichtung (162), bevorzugt mit einem Mikroprozessor (163) ausgebildeten Signalverarbeitungseinrichtung (162), ausgestaltet sind.

7. Schutzvorrichtung (100, 400) nach einem oder mehreren der vorhergehenden Ansprüche, **gekennzeichnet durch** eine weitere Signalübertragungseinrichtung (128), über die wenigstens die wenigstens eine zentrale Steuerstufe (112) mit weiteren, externen Signalverarbeitungseinrichtungen (129), insbesondere mit Einrichtungen zu einer Protokollierung von Betriebszuständen der Schutzvorrichtung (100, 400) und/oder mit Einrichtungen zu einer Fernsteuerung und/oder Fernwartung, verbunden ist, wobei bevorzugt die weitere Signalübertragungseinrichtung (128) mit einem Datenbus (130) ausgebildet ist.

8. Schutzvorrichtung (100, 400) nach Anspruch 6 oder nach Anspruch 7 in Verbindung mit Anspruch 6, **dadurch gekennzeichnet, dass** die wenigstens eine Signalverarbeitungseinrichtung (162) der wenigstens einen zentralen Steuerstufe (112) wenigstens eingerichtet ist für
• ein Steuern eines Verbindens und/oder Trennens wenigstens einer der Lasten (107) mit bzw. von der Energiequelle (102, 402A, 402B) in Abhängigkeit wenigstens von einer verfügbaren Leistungsabgabe der Energiequelle (102, 402A, 402B),
• ein Erkennen hochohmiger Kurzschlüsse und/oder Isolationsfehler (F) wenigstens in einem des wenigstens einen Netzstrangs (104, 105, 106, 404) wenigstens auf Grundlage wenigstens eines vorgegebenen Leitungswiderstands des wenigstens einen Netzstrangs (104, 105, 106, 404), wenigstens eines gemessenen Strangstroms (IL, IL1, IL2, IL3) und wenigstens einer gemessenen Lastspannung (UL, UL1, UL2, UL3),
• ein Erkennen gegenüber einem Sollzustand veränderter Impedanzen und/oder von Unterbrechungen in wenigstens einem des wenigstens einen Netzstrangs (104, 105, 106, 404) und/ oder in wenigstens einem sonstigen Zweig der Energieübertragungseinrichtung (103, 403).

9. Schutzvorrichtung (100, 400) nach Anspruch 6 oder nach Anspruch 7 oder 8 in Verbindung mit Anspruch 6, **dadurch gekennzeichnet, dass** die wenigstens eine Signalverarbeitungseinrichtung (162) der wenigstens einen Lastschutzstufe (108, 109, 110) des wenigstens einen Netzstrangs (104, 105, 106, 404) wenigstens eingerichtet ist für
• ein Auswerten des von der Messeinrichtung (150, 151) der wenigstens einen Lastschutzstufe (108, 109, 110) detektierten Strangstroms (IL, IL1, IL2, IL3) und/oder der von der Messeinrichtung (150, 151) der wenigstens einen Lastschutzstufe (108, 109, 110) detektierten Lastspannung (UL, UL1, UL2, UL3), bevorzugt von deren Augenblickswerten und/oder deren zeitlichen Verläufen, sowie
• ein daraus Erkennen wenigstens eines Fehlerstroms in dem wenigstens einen Netzstrang (104, 105, 106, 404).

10. Schutzvorrichtung (100, 300, 400) nach einem oder mehreren der vorhergehenden Ansprüche, **dadurch gekennzeichnet, dass** jeder Quellenschutzstufe (111) je eine Gleichspannungsumformeinrichtung, insbesondere ausgebildet mit einem Gleichspannungswandler (119), nachgeschaltet ist zum Umformen einer von der Quellenschutzstufe (111) abgegebenen Spannung in eine Schutzkleinspannung zum Betreiben der wenigstens einen zweiten Schaltvorrichtung (113, 114, 115) und/oder der wenigstens einen zentralen Steuerstufe (112, 312).

11. Schutzvorrichtung (100, 300, 400) nach einem oder mehreren der vorhergehenden Ansprüche, **dadurch gekennzeichnet, dass** die wenigstens eine Energiequelle (102, 402A, 402B) zum Liefern wenigstens einer Gleichspannung eingerichtet ist, durch die der wenigstens einen Last (107) Energie von der wenigstens einen Energiequelle (102, 402A, 402B) zuführbar ist.

12. Schutzvorrichtung (100, 300, 400) nach einem oder mehreren der vorhergehenden Ansprüche, **dadurch gekennzeichnet, dass** die wenigstens eine Energiequelle (102, 402A, 402B) zum Liefern wenigstens einer Wechselspannung eingerichtet ist, durch die der wenigstens einen Energie von der wenigstens einen Energiequelle (102, 402A, 402B) zuführbar ist, und dass bevorzugt eine Gleichrichterstufe vorgesehen ist zum Speisen der wenigstens einen Quellenschutzstufe (111) aus der wenigstens einen Energiequelle (102, 402A, 402B).

13. Elektrische Energieversorgungseinrichtung (101, 301, 401), **gekennzeichnet durch** eine Schutzvorrichtung (100, 300, 400) nach einem oder mehreren der vorhergehenden Ansprüche.
